# EUROPEAN PATENT APPLICATION

(11) **EP 4 801 051 A1**
(43) Date of publication of application: **02.09.2026**
(21) Application number: 26159723.1
(22) Date of filing: 20.02.2026
(51) Int. Cl.: H04N 23/61, G02B 27/01, G06Q 30/02, H04N 23/60, H04N 23/661, H04N 23/68, H04N 23/80, H04N 23/90, G06F 40/00

(54) **RESPONDING TO USER REQUESTS RELATED TO IMAGES**

(30) Priority: 28.02.2025 US 202563765276 P; 09.01.2026 US 202663956989 P; 26.01.2026 US 202619459873
(71) Applicant: Apple Inc., Cupertino, CA 95014 (US)
(72) Inventor: KLINK, Guilherme, Cupertino, CA95014 (US); AGARWAL, Sachin, Cupertino, CA 95014 (US); BURGNER, Peter, Cupertino, CA95014 (US); DEHGHAN, Afshin, Cupertino, CA 95014 (US); EDWIN, Lionel E., Cupertino, CA 95014 (US); JANSEN DOS REIS, Paulo R., Cupertino, CA 95014 (US); KANTOR, Niv, Cupertino, CA 95014 (US); MARIN, Giulio, Cupertino, CA 95014 (US); SOKOLOV, Ariana Isabel K., Cupertino, CA 95014 (US); SPARKS, Lee, Cupertino, CA 95014 (US); VADLAPUDI, Ravikiran, Cupertino, CA 95014 (US)
(74) Representative: Karl, Christof

(57) **Abstract**

Disclosed herein are example processes for capturing images in a multidevice system. Example methods determine whether input images satisfy a quality criterion and when the input images do not satisfy the quality criterion, cause a prompt to be displayed on a device other than the device that obtained the input images.

## Description

### CROSS-REFERENCE TO RELATED APPLICATIONS

This application relates to the following co-pending provisional application: U.S. Patent Application Serial No. 63/765,276, entitled "MULTIDEVICE CAMERA SELECTION," filed February 28, 2025, the contents of which are hereby incorporated by reference in its entirety.

### TECHNICAL FIELD

The present disclosure generally relates to responding to user requests related to images.

### BACKGROUND

The development of computer systems for interacting with and/or providing three-dimensional scenes has expanded significantly in recent years. Example three-dimensional scenes (e.g., environments) include physical scenes and extended reality scenes.

### SUMMARY

Example methods are disclosed herein. An example method includes: at a first computer system that is in communication with one or more image sensors: obtaining, using the one or more image sensors, a first image; receiving a user request related to the first image; and in response to obtaining the first image and receiving the user request: in accordance with a determination that a quality of the first image does not satisfy a quality criterion, causing a second computer system to provide a prompt to capture a second image with the second computer system; and in accordance with a determination that the quality of the first image satisfies the quality criterion: generating a response to the user request based on the first image; and providing an output including the response to the user request based on the first image.

Example non-transitory computer-readable storage media are disclosed herein. An example non-transitory computer-readable storage medium stores one or more programs. The one or more programs are configured to be executed by one or more processors of a first computer system that is in communication with one or more image sensors. The one or more programs include instructions for: obtaining, using the one or more image sensors, a first image; receiving a user request related to the first image; and in response to obtaining the first image and receiving the user request: in accordance with a determination that a quality of the first image does not satisfy a quality criterion, causing a second computer system to provide a prompt to capture a second image with the second computer system; and in accordance with a determination that the quality of the first image satisfies the quality criterion: generating a response to the user request based on the first image; and providing an output including the response to the user request based on the first image.

Example computer systems are disclosed herein. An example first computer system is configured to communicate with one or more image sensors. The first computer system comprises: one or more processors; and memory storing one or more programs configured to be executed by the one or more processors, the one or more programs including instructions for: obtaining, using the one or more image sensors, a first image; receiving a user request related to the first image; and in response to obtaining the first image and receiving the user request: in accordance with a determination that a quality of the first image does not satisfy a quality criterion, causing a second computer system to provide a prompt to capture a second image with the second computer system; and in accordance with a determination that the quality of the first image satisfies the quality criterion: generating a response to the user request based on the first image; and providing an output including the response to the user request based on the first image.

An example first computer system is configured to communicate with one or more image sensors. The first computer system comprises: means for obtaining, using the one or more image sensors, a first image; means for receiving a user request related to the first image; and means, in response to obtaining the first image and receiving the user request, for: in accordance with a determination that a quality of the first image does not satisfy a quality criterion, causing a second computer system to provide a prompt to capture a second image with the second computer system; and in accordance with a determination that the quality of the first image satisfies the quality criterion: generating a response to the user request based on the first image; and providing an output including the response to the user request based on the first image.

An example computer program product comprises one or more programs configured to be executed by one or more processors of a first computer system that is in communication with one or more image sensors. The one or more programs include instructions for: obtaining, using the one or more image sensors, a first image; receiving a user request related to the first image; and in response to obtaining the first image and receiving the user request: in accordance with a determination that a quality of the first image does not satisfy a quality criterion, causing a second computer system to provide a prompt to capture a second image with the second computer system; and in accordance with a determination that the quality of the first image satisfies the quality criterion: generating a response to the user request based on the first image; and providing an output including the response to the user request based on the first image.

Causing a second computer system to provide a prompt to capture a second image when a first image does not satisfy a quality criterion allows for a more fluid interaction between the user and multiple devices of a system. Specifically, the second computer system can indicate to the user that the second computer system is capable of taking another picture that will satisfy the quality criterion automatically, while in the process of taking the picture. This provides the user with more information and reduces the number of inputs the user needs to provide to capture an image to complete a requested task. In this manner, the user-device interaction is made more efficient and accurate (e.g., by reducing the number of inputs required to capture an appropriate image and by providing the user with additional information about device capabilities), which in turn reduces power usage and improves battery life of the devices by enabling the user to use the devices more quickly and efficiently.

Example methods are disclosed herein. An example method includes: at a computer system that is in communication with one or more visual imaging sensors and one or more audio output devices: while a head of a user of the computer system has a head pose that corresponds to a forward-facing region of a three-dimensional (3D) scene, receiving a natural language input that corresponds to a first object within the 3D scene; capturing, via the one or more visual imaging sensors, image data associated with the natural language input that corresponds to the first object within the 3D scene; and in response to receiving the natural language input that corresponds to the first object within the 3D scene: in accordance with a determination that a visibility metric that represents an amount of the forward-facing region of the 3D scene depicted by the image data satisfies a condition, providing, via the one or more audio output devices, a first audio output that corresponds to the first object; and in accordance with a determination that the visibility metric that represents the amount of the forward-facing region of the 3D scene depicted by the image data does not satisfy the condition, providing, via the one or more audio output devices, a second audio output that corresponds to the first object.

Example non-transitory computer-readable storage media are disclosed herein. An example non-transitory computer-readable storage medium stores one or more programs. The one or more programs are configured to be executed by one or more processors of a computer system that is in communication with one or more visual imaging sensors and one or more audio output devices. The one or more programs include instructions for: while a head of a user of the computer system has a head pose that corresponds to a forward-facing region of a three-dimensional (3D) scene, receiving a natural language input that corresponds to a first object within the 3D scene; capturing, via the one or more visual imaging sensors, image data associated with the natural language input that corresponds to the first object within the 3D scene; and in response to receiving the natural language input that corresponds to the first object within the 3D scene: in accordance with a determination that a visibility metric that represents an amount of the forward-facing region of the 3D scene depicted by the image data satisfies a condition, providing, via the one or more audio output devices, a first audio output that corresponds to the first object; and in accordance with a determination that the visibility metric that represents the amount of the forward-facing region of the 3D scene depicted by the image data does not satisfy the condition, providing, via the one or more audio output devices, a second audio output that corresponds to the first object.

Example computer systems are disclosed herein. An example computer system is configured to communicate with one or more visual imaging sensors and one or more audio output devices. The computer system comprises: one or more processors; and memory storing one or more programs configured to be executed by the one or more processors, the one or more programs including instructions for: while a head of a user of the computer system has a head pose that corresponds to a forward-facing region of a three-dimensional (3D) scene, receiving a natural language input that corresponds to a first object within the 3D scene; capturing, via the one or more visual imaging sensors, image data associated with the natural language input that corresponds to the first object within the 3D scene; and in response to receiving the natural language input that corresponds to the first object within the 3D scene: in accordance with a determination that a visibility metric that represents an amount of the forward-facing region of the 3D scene depicted by the image data satisfies a condition, providing, via the one or more audio output devices, a first audio output that corresponds to the first object; and in accordance with a determination that the visibility metric that represents the amount of the forward-facing region of the 3D scene depicted by the image data does not satisfy the condition, providing, via the one or more audio output devices, a second audio output that corresponds to the first object.

An example computer system is configured to communicate with one or more visual imaging sensors and one or more audio output devices. The computer system comprises: means, while a head of a user of the computer system has a head pose that corresponds to a forward-facing region of a three-dimensional (3D) scene, for receiving a natural language input that corresponds to a first object within the 3D scene; means for capturing, via the one or more visual imaging sensors, image data associated with the natural language input that corresponds to the first object within the 3D scene; and means, in response to receiving the natural language input that corresponds to the first object within the 3D scene, for: in accordance with a determination that a visibility metric that represents an amount of the forward-facing region of the 3D scene depicted by the image data satisfies a condition, providing, via the one or more audio output devices, a first audio output that corresponds to the first object; and in accordance with a determination that the visibility metric that represents the amount of the forward-facing region of the 3D scene depicted by the image data does not satisfy the condition, providing, via the one or more audio output devices, a second audio output that corresponds to the first object.

An example computer program product comprises one or more programs configured to be executed by one or more processors of a computer system that is in communication with one or more visual imaging sensors and one or more audio output devices. The one or more programs include instructions for: while a head of a user of the computer system has a head pose that corresponds to a forward-facing region of a three-dimensional (3D) scene, receiving a natural language input that corresponds to a first object within the 3D scene; capturing, via the one or more visual imaging sensors, image data associated with the natural language input that corresponds to the first object within the 3D scene; and in response to receiving the natural language input that corresponds to the first object within the 3D scene: in accordance with a determination that a visibility metric that represents an amount of the forward-facing region of the 3D scene depicted by the image data satisfies a condition, providing, via the one or more audio output devices, a first audio output that corresponds to the first object; and in accordance with a determination that the visibility metric that represents the amount of the forward-facing region of the 3D scene depicted by the image data does not satisfy the condition, providing, via the one or more audio output devices, a second audio output that corresponds to the first object.

Providing audio outputs based on whether the visibility metric satisfies the condition allows the computer system to more accurately and efficiently satisfy user requests about objects that are present within a 3D scene. For example, if the visibility metric does not satisfy the condition, the captured image data may not depict the object related to the user request, so the computer system may be unable to satisfy the user request based on the captured image data. As described herein, the computer system may thus provide one or more audio outputs that prompt to user to specify the object related to the user request and/or to prompt the user to capture an image of the object with a different device, thereby allowing the computer system to accurately satisfy the user request based on new image data that depicts the relevant object. As another example, if the visibility metric satisfies the condition, the captured image data may depict the object related to the user request, so the computer system can satisfy the user request based on the captured image data. The computer system may then provide an audio output that satisfies the user request. In this manner, the user-device interface is made more accurate and efficient (e.g., by allowing devices to accurately respond to user requests about objects in a 3D scene, by preventing electronic devices from providing incorrect responses to user requests about objects in a 3D scene, by reducing the number of user inputs required for electronic devices to satisfy user requests, and by reducing the number of inputs otherwise required to undo and/or cancel the results of incorrectly interpreted user requests), which in turn reduces power usage and improves battery life of the devices by enabling the user to use the devices more quickly and efficiently.

In some examples, the computer system is a desktop computer with an associated display. In some examples, the computer system is a portable device (e.g., a notebook computer, tablet computer, or handheld device such as a smartphone). In some examples, the computer system is a personal electronic device (e.g., a wearable electronic device, such as a watch or a head-mounted device). In some examples, the computer system has a touchpad. In some examples, the computer system has one or more cameras. In some examples, the computer system has a display generation component (e.g., a display device such as a head-mounted display, a display, a projector, a touch-sensitive display (also known as a "touch screen" or "touch-screen display"), or other device or component that presents visual content to a user, for example on or in the display generation component itself or produced from the display generation component and visible elsewhere). In some examples, the computer system does not have a display generation component and does not present visual content to a user. In some examples, the computer system has a touch-sensitive display (also known as a "touch screen" or "touch-screen display"). In some examples, the computer system has one or more eye-tracking components. In some examples, the computer system has one or more hand-tracking components. In some examples, the computer system has one or more output devices, the output devices including one or more tactile output generators and/or one or more audio output devices. In some examples, the computer system has one or more processors, memory, and one or more modules, programs or sets of instructions stored in the memory for performing various functions described herein. In some examples, the user interacts with the computer system through a stylus and/or finger contacts and gestures on the touch-sensitive surface, movement of the user's eyes and hand in space or the user's body as captured by cameras and other movement sensors, and/or voice inputs as captured by one or more audio input devices. Executable instructions for performing these functions are, optionally, included in a transitory and/or non-transitory computer-readable storage medium or other computer program product configured for execution by one or more processors.

Note that the various examples described above can be combined with any other examples described herein. The features and advantages described in the specification are not all inclusive and, in particular, many additional features and advantages will be apparent to one of ordinary skill in the art in view of the drawings, specification, and claims. Moreover, it should be noted that the language used in the specification has been principally selected for readability and instructional purposes, and may not have been selected to delineate or circumscribe the inventive subject matter.

### BRIEF DESCRIPTION OF THE DRAWINGS

For a better understanding of the various described examples, reference should be made to the Detailed Description below, in conjunction with the following drawings in which like reference numerals refer to corresponding parts throughout the figures.
FIG. 1 is a block diagram illustrating an operating environment of a computer system for interacting with three-dimensional (3D) scenes, according to some examples.
FIG. 2 is a block diagram of a user-facing component of the computer system, according to some examples.
FIG. 3A is a block diagram of a controller of the computer system, according to some examples.
FIG. 3B is a block diagram of an image evaluation unit of the computer system, according to some examples.
FIG. 4 illustrates an architecture for a foundation model, according to some examples.
FIGS. 5A-5E illustrate capturing images in a multiple device system, according to some examples.
FIG. 6 is a flow diagram of a method for capturing images in a multiple device system, according to some examples.
FIG. 7 illustrates a forward-facing head pose determined based on a pose of a first device and a pose of a second device, according to some examples.
FIGS. 8A-8B illustrate regions of interest that are determined based on a forward-facing head pose, according to some examples.
FIGS. 9A-9B illustrate determination of a visibility metric for a region of interest, according to some examples.
FIGS. 10A-10G illustrate a device performing various actions according to a determined visibility metric and in response to receiving a natural language input, according to some examples.
FIG. 11 is a flow diagram of a method for providing audio outputs in response to a natural language input, according to some examples.

### DETAILED DESCRIPTION

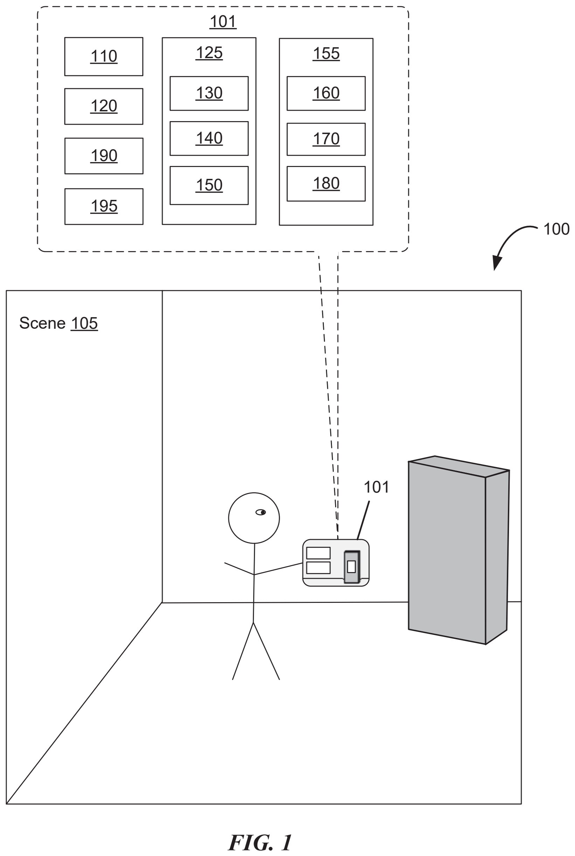

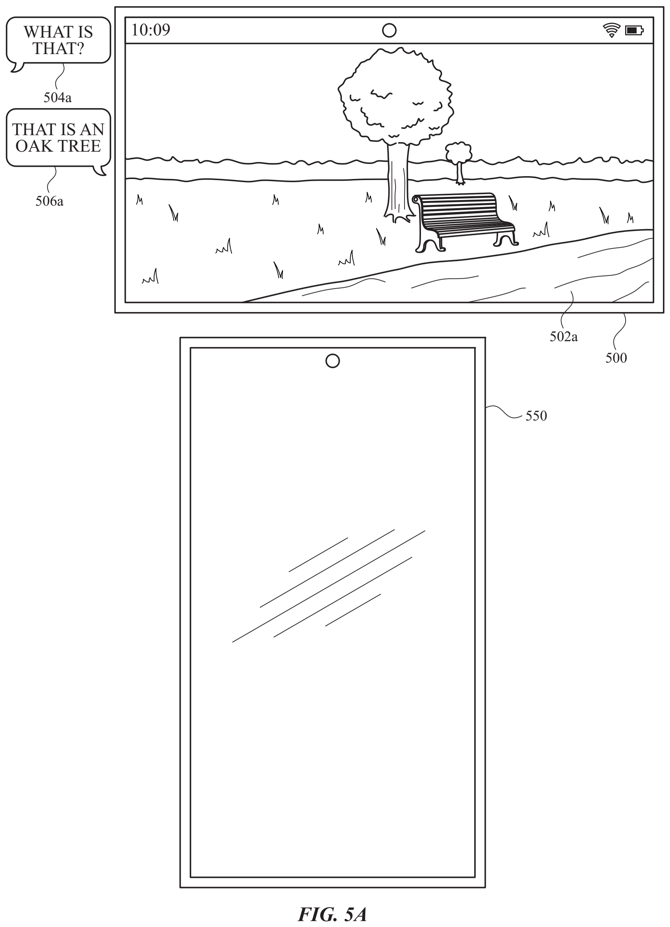

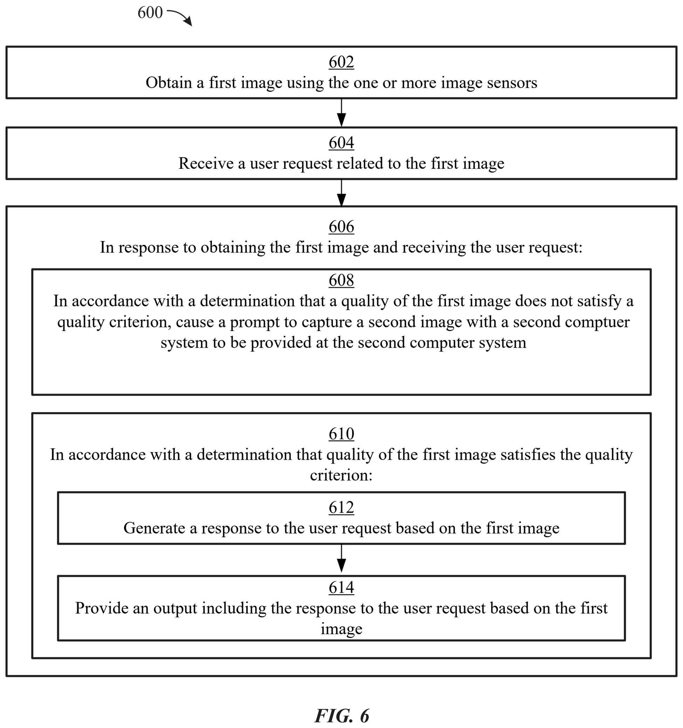

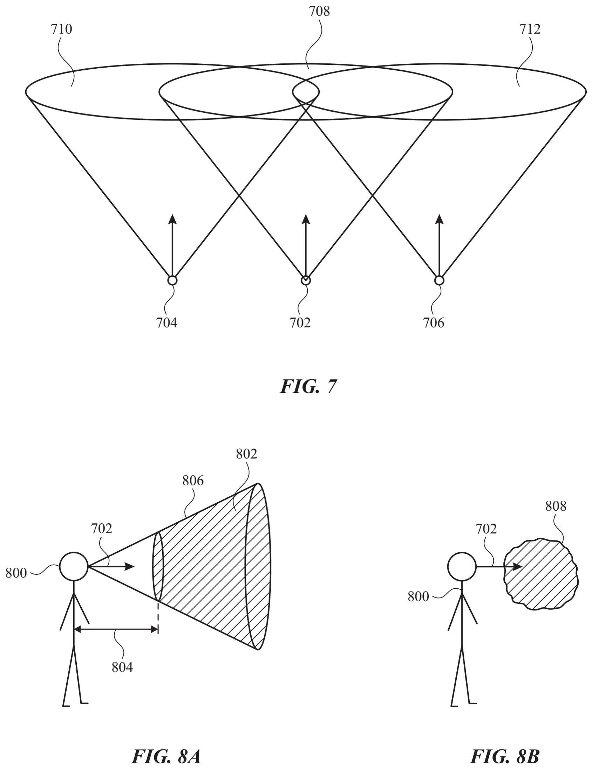

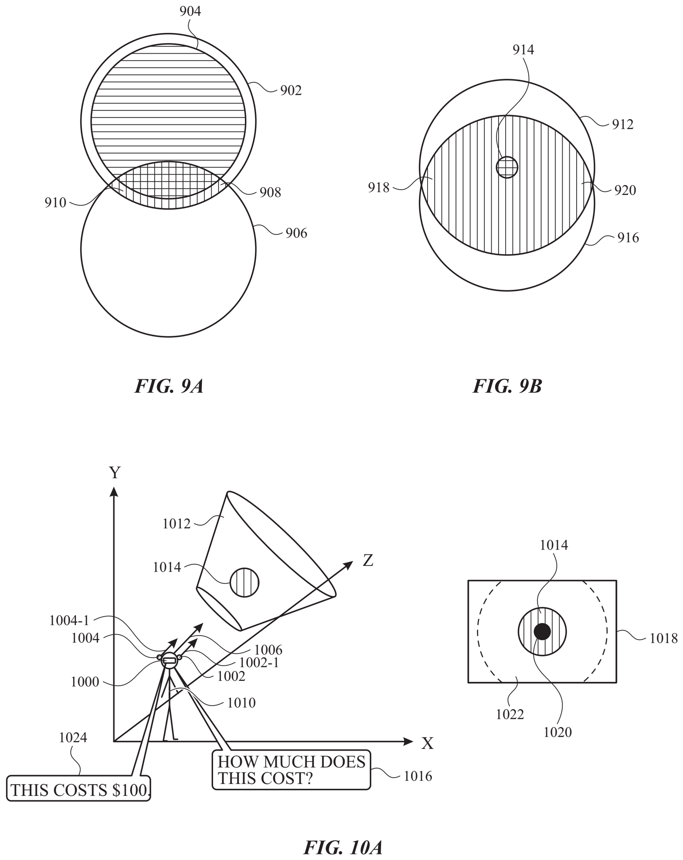

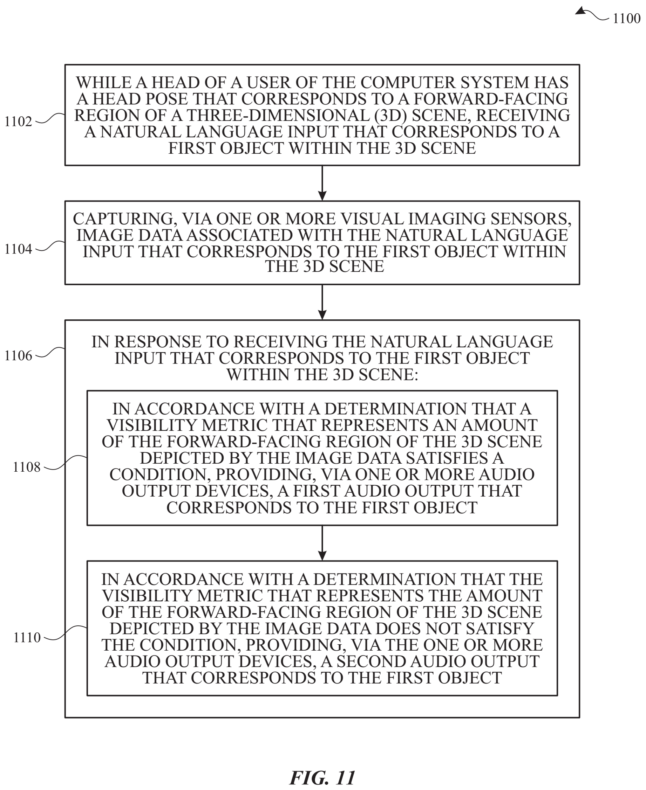

FIGS. 1-4 provide a description of example computer systems and techniques for interacting with three-dimensional scenes. FIGS. 5A-5E illustrate capturing images in a multiple device system. FIG. 6 is a flow diagram of a method for capturing images in a multiple device system. FIGS. 5A-5E are used to describe the method of FIG. 6. FIG. 7 illustrates a forward-facing head pose determined based on a pose of a first device and a pose of a second device. FIGS. 8A-8B illustrate regions of interest that are determined based on a forward-facing head pose. FIGS. 9A-9B illustrate determination of a visibility metric for a region of interest. FIGS. 10A-10G illustrate a device performing various actions according to a determined visibility metric and in response to receiving a natural language input. FIG. 11 is a flow diagram of a method for providing audio outputs in response to a natural language input. FIGS. 7, 8A-8B, 9A-9B, and 10A-10G are used to describe the method of FIG. 11.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer-readable medium claims where the system or computer-readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer-readable storage medium can repeat the steps of a method as many times as are needed to ensure that all of the contingent steps have been performed.

FIG. 1 is a block diagram illustrating an operating environment of computer system 101 for interacting with three-dimensional scenes, according to some examples. In FIG. 1, a user interacts with three-dimensional scene 105 via operating environment 100 that includes computer system 101. In some examples, computer system 101 includes controller 110 (e.g., processors of a portable electronic device or a remote server), user-facing component 120, one or more input devices 125 (e.g., eye tracking device 130, hand tracking device 140, and/or other input devices 150), one or more output devices 155 (e.g., speakers 160, tactile output generators 170, and other output devices 180), one or more sensors 190 (e.g., image sensors, light sensors, depth sensors, tactile sensors, orientation sensors, proximity sensors, temperature sensors, location sensors, motion sensors, velocity sensors, audio sensors, etc.), and one or more peripheral devices 195 (e.g., home appliances, wearable devices, etc.). In some examples, one or more of input devices 125, output devices 155, sensors 190, and peripheral devices 195 are integrated with user-facing component 120 (e.g., in a head-mounted device or a handheld device).

While pertinent features of the operating environment 100 are shown in FIG. 1, those of ordinary skill in the art will appreciate from the present disclosure that various other features have not been illustrated for the sake of brevity and so as not to obscure more pertinent aspects of the examples disclosed herein.

Hardware: There are many different types of electronic systems that enable a person to sense and/or interact with three-dimensional scenes. Examples include head-mounted systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head-mounted system may include speakers and/or other audio output devices integrated into the head-mounted system for providing audio output. A head-mounted system may have one or more speaker(s) and an integrated opaque display. Alternatively, a head-mounted system may be configured to accept an external opaque display (e.g., a smartphone). Alternatively, a head-mounted system may be configured to operate without displaying content, e.g., so that the head-mounted system provides output to a user via tactile and/or auditory means. The head-mounted system may incorporate one or more imaging sensors to capture images or video of the physical environment, and/or one or more microphones to capture audio of the physical environment. Rather than an opaque display, a head-mounted system may have a transparent or translucent display. The transparent or translucent display may have a medium through which light representative of images is directed to a person's eyes. The display may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In one example, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

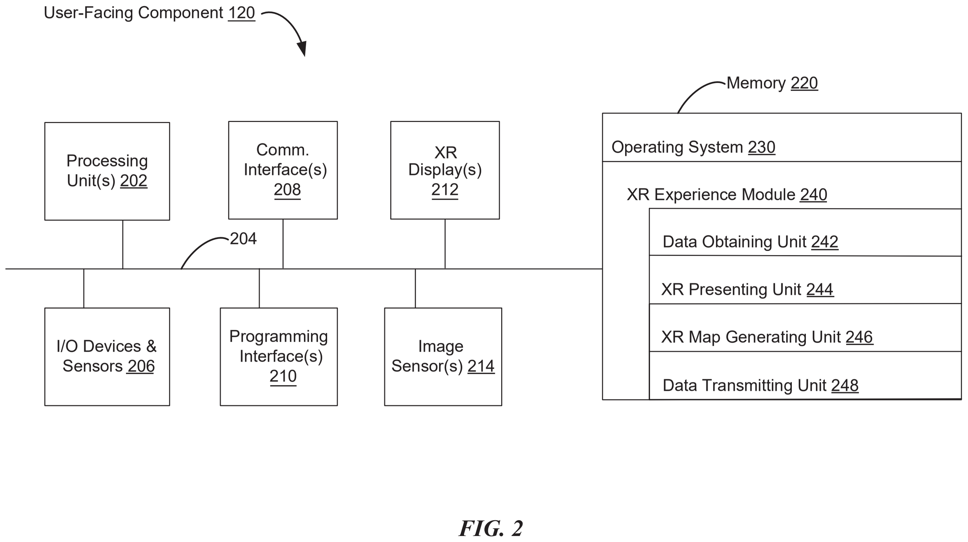

In some examples, user-facing component 120 is configured to provide a visual component of a three-dimensional scene. In some examples, user-facing component 120 includes a suitable combination of software, firmware, and/or hardware. User-facing component 120 is described in greater detail below with respect to FIG. 2. In some examples, the functionalities of controller 110 are provided by and/or combined with user-facing component 120. In some examples, user-facing component 120 provides an extended reality (XR) experience to the user while the user is virtually and/or physically present within scene 105.

In some examples, user-facing component 120 is worn on a part of the user's body (e.g., on his/her head, on his/her hand, etc.). In some examples, user-facing component 120 includes one or more XR displays provided to display the XR content. In some examples, user-facing component 120 encloses the field-of-view of the user. In some examples, user-facing component 120 is a handheld device (such as a smartphone or tablet) configured to present XR content, and the user holds the device with a display directed towards the field-of-view of the user and a camera directed towards the scene 105. In some examples, the handheld device is optionally placed within an enclosure that is worn on the head of the user. In some examples, the handheld device is optionally placed on a support (e.g., a tripod) in front of the user. In some examples, user-facing component 120 is an XR chamber, enclosure, or room configured to present XR content in which the user does not wear or hold user-facing component 120. Many user interfaces described with reference to one type of hardware for displaying XR content (e.g., a handheld device or a device on a tripod) could be implemented on another type of hardware for displaying XR content (e.g., a head-mounted device (HMD) or other wearable computing device). For example, a user interface showing interactions with XR content triggered based on interactions that happen in a space in front of a handheld or tripod-mounted device could similarly be implemented with an HMD where the interactions happen in a space in front of the HMD and the responses of the XR content are displayed via the HMD. Similarly, a user interface showing interactions with XR content triggered based on movement of a handheld or tripod-mounted device relative to the physical environment (e.g., scene 105 or a part of the user's body (e.g., the user's eye(s), head, or hand)) could similarly be implemented with an HMD where the movement is caused by movement of the HMD relative to the physical environment (e.g., scene 105 or a part of the user's body (e.g., the user's eye(s), head, or hand)).

FIG. 2 is a block diagram of user-facing component 120, according to some examples. While certain specific features are illustrated, those skilled in the art will appreciate from the present disclosure that various other features have not been illustrated for the sake of brevity, and so as not to obscure more pertinent aspects of the examples disclosed herein. Moreover, FIG. 2 is intended more as a functional description of the various features that could be present in a particular implementation, as opposed to a structural schematic of the examples described herein. As recognized by those of ordinary skill in the art, components shown separately could be combined and some components could be separated. For example, some functional modules shown separately in FIG. 2 could be implemented in a single module and the various functions of single functional blocks could be implemented by one or more functional blocks in various examples. The actual number of modules and the division of particular functions and how features are allocated among them will vary from one implementation to another and, in some examples, depends in part on the particular combination of hardware, software, and/or firmware chosen for a particular implementation.

In some examples, user-facing component 120 (e.g., HMD) includes one or more processing units 202 (e.g., microprocessors, ASICs, FPGAs, GPUs, CPUs, processing cores, and/or the like), one or more input/output (I/O) devices and sensors 206, one or more communication interfaces 208 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, and/or the like type interface), one or more programming (e.g., I/O) interfaces 210, one or more XR displays 212, one or more optional interior- and/or exterior-facing image sensors 214, a memory 220, and one or more communication buses 204 for interconnecting these and various other components.

In some examples, one or more communication buses 204 include circuitry that interconnects and controls communications between system components. In some examples, one or more I/O devices and sensors 206 include at least one of an inertial measurement unit (IMU), an accelerometer, a gyroscope, a thermometer, one or more biometric sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some examples, one or more XR displays 212 are configured to provide an XR experience to the user. In some examples, one or more XR displays 212 correspond to holographic, digital light processing (DLP), liquid-crystal display (LCD), liquid-crystal on silicon (LCoS), organic light-emitting field-effect transistor (OLET), organic light-emitting diode (OLED), surface-conduction electron-emitter display (SED), field-emission display (FED), quantum-dot light-emitting diode (QD-LED), micro-electro-mechanical system (MEMS), and/or the like display types. In some examples, one or more XR displays 212 correspond to diffractive, reflective, polarized, holographic, etc. waveguide displays. For example, user-facing component 120 (e.g., HMD) includes a single XR display. In another example, user-facing component 120 includes an XR display for each eye of the user. In some examples, one or more XR displays 212 are capable of presenting XR content. In some examples, one or more XR displays 212 are omitted from user-facing component 120. For example, user-facing component 120 does not include any component that is configured to display content (or does not include any component that is configured to display XR content) and user-facing component 120 provides output via audio and/or haptic output types.

In some examples, one or more image sensors 214 are configured to obtain image data that corresponds to at least a portion of the face of the user that includes the eyes of the user (and may be referred to as an eye-tracking camera). In some examples, one or more image sensors 214 are configured to obtain image data that corresponds to at least a portion of the user's hand(s) and, optionally, arm(s) of the user (and may be referred to as a hand-tracking camera). In some examples, one or more image sensors 214 are configured to be forward-facing to obtain image data that corresponds to the scene as would be viewed by the user if user-facing component 120 (e.g., HMD) was not present (and may be referred to as a scene camera). One or more optional image sensors 214 can include one or more RGB cameras (e.g., with a complementary metal-oxide-semiconductor (CMOS) image sensor or a charge-coupled device (CCD) image sensor), one or more infrared (IR) cameras, one or more event-based cameras, and/or the like.

Memory 220 includes high-speed random-access memory, such as DRAM, SRAM, DDR RAM, or other random-access solid-state memory devices. In some examples, memory 220 includes non-volatile memory, such as one or more magnetic disk storage devices, optical disk storage devices, flash memory devices, or other non-volatile solid-state storage devices. Memory 220 optionally includes one or more storage devices remotely located from the one or more processing units 202. Memory 220 comprises a non-transitory computer-readable storage medium. In some examples, memory 220 or the non-transitory computer-readable storage medium of memory 220 stores the following programs, modules and data structures, or a subset thereof, including optional operating system 230 and XR experience module 240.

Operating system 230 includes instructions for handling various basic system services and for performing hardware dependent tasks. In some examples, XR experience module 240 is configured to present XR content to the user via one or more XR displays 212 or one or more speakers. To that end, in various examples, XR experience module 240 includes data obtaining unit 242, XR presenting unit 244, XR map generating unit 246, and data transmitting unit 248.

In some examples, data obtaining unit 242 is configured to obtain data (e.g., presentation data, interaction data, sensor data, location data, etc.) from at least controller 110 of FIG. 1. To that end, in various examples, data obtaining unit 242 includes instructions and/or logic therefor, and heuristics and metadata therefor.

In some examples, XR presenting unit 244 is configured to present XR content via one or more XR displays 212 or one or more speakers. To that end, in various examples, XR presenting unit 244 includes instructions and/or logic therefor, and heuristics and metadata therefor.

In some examples, XR map generating unit 246 is configured to generate an XR map (e.g., a 3D map of the extended reality scene or a map of the physical environment into which computer-generated objects can be placed) based on media content data. To that end, in various examples, XR map generating unit 246 includes instructions and/or logic therefor, and heuristics and metadata therefor.

In some examples, the data transmitting unit 248 is configured to transmit data (e.g., presentation data, location data, sensor data, etc.) to at least controller 110, and optionally one or more of input devices 125, output devices 155, sensors 190, and/or peripheral devices 195. To that end, in various examples, data transmitting unit 248 includes instructions and/or logic therefor, and heuristics and metadata therefor.

Although data obtaining unit 242, XR presenting unit 244, XR map generating unit 246, and data transmitting unit 248 are shown as residing on a single device (e.g., user-facing component 120 of FIG. 1), in other examples, any combination of data obtaining unit 242, XR presenting unit 244, XR map generating unit 246, and data transmitting unit 248 may reside on separate computing devices.

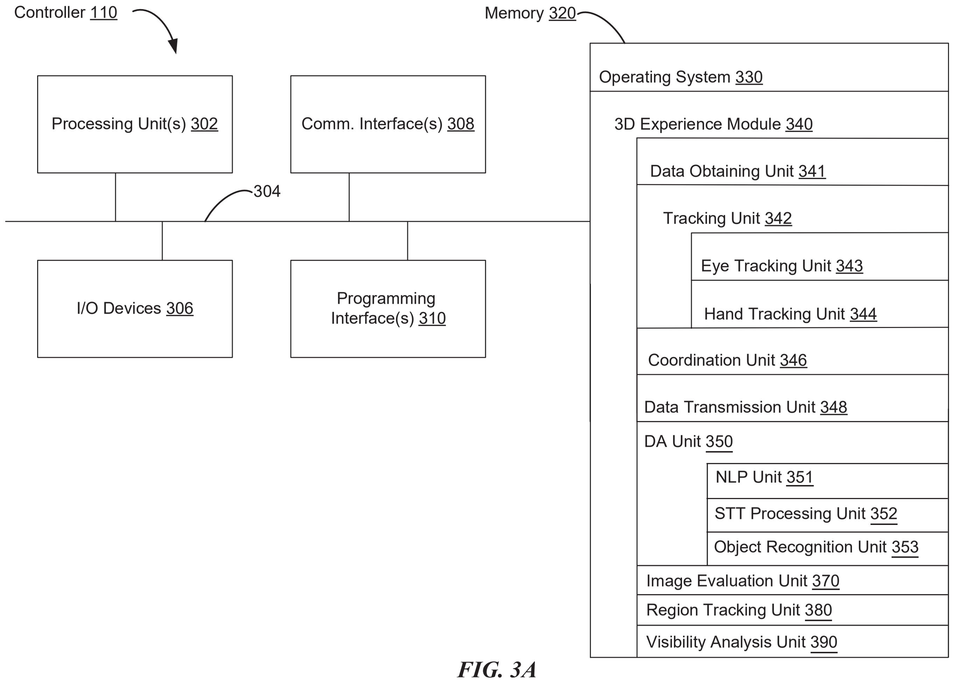

Returning to FIG. 1, controller 110 is configured to manage and coordinate a user's experience with respect to a three-dimensional scene. In some examples, controller 110 includes a suitable combination of software, firmware, and/or hardware. Controller 110 is described in greater detail below with respect to FIG. 3A.

In some examples, controller 110 is a computing device that is local or remote relative to scene 105 (e.g., a physical environment). For example, controller 110 is a local server located within scene 105. In another example, controller 110 is a remote server located outside of scene 105 (e.g., a cloud server, central server, etc.). In some examples, controller 110 is communicatively coupled with the component(s) of computer system 101 that are configured to provide output to the user (e.g., output devices 155 and/or user-facing component 120) via one or more wired or wireless communication channels (e.g., BLUETOOTH, IEEE 802.11x, IEEE 802.16x, IEEE 802.3x, etc.). In some examples, controller 110 is included within the enclosure (e.g., a physical housing) of the component(s) of computer system 101 that are configured to provide output to the user (e.g., user-facing component 120) or shares the same physical enclosure or support structure with the component(s) of computer system 101 that are configured to provide output to the user.

In some examples, the various components and functions of controller 110 described below with respect to FIGS. 3A-3B, 4, 5A-5E, 6, 7, 8A-8B, 9A-9B, 10A-10G, and 11 are distributed across multiple devices. For example, a first set of the components of controller 110 (and their associated functions) are implemented on a server system remote to scene 105 while a second set of the components of controller 110 (and their associated functions) are local to scene 105. For example, the second set of components are implemented within a portable electronic device (e.g., a wearable device such as an HMD) that is present within scene 105. It will be appreciated that the particular manner in which the various components and functions of controller 110 are distributed across various devices can vary based on different implementations of the examples described herein.

FIG. 3A is a block diagram of a controller 110, according to some examples. While certain specific features are illustrated, those skilled in the art will appreciate from the present disclosure that various other features have not been illustrated for the sake of brevity, and so as not to obscure more pertinent aspects of the examples disclosed herein. Moreover, FIG. 3A is intended more as a functional description of the various features that may be present in a particular implementation, as opposed to a structural schematic of the examples described herein. As recognized by those of ordinary skill in the art, components shown separately could be combined and some components could be separated. For example, some functional modules shown separately in FIG. 3A could be implemented in a single module and the various functions of single functional blocks could be implemented by one or more functional blocks in various examples. The actual number of modules and the division of particular functions and how features are allocated among them will vary from one implementation to another and, in some examples, depends in part on the particular combination of hardware, software, and/or firmware chosen for a particular implementation.

In some examples, controller 110 includes one or more processing units 302 (e.g., microprocessors, application-specific integrated-circuits (ASICs), field-programmable gate arrays (FPGAs), graphics processing units (GPUs), central processing units (CPUs), processing cores, and/or the like), one or more input/output (I/O) devices 306, one or more communication interfaces 308 (e.g., universal serial bus (USB), FIREWIRE, THUNDERBOLT, IEEE 802.3x, IEEE 802.11x, IEEE 802.16x, global system for mobile communications (GSM), code division multiple access (CDMA), time division multiple access (TDMA), global positioning system (GPS), infrared (IR), BLUETOOTH, ZIGBEE, and/or the like type interface), one or more programming (e.g., I/O) interfaces 310, memory 320, and one or more communication buses 304 for interconnecting these and various other components.

In some examples, one or more communication buses 304 include circuitry that interconnects and controls communications between system components. In some examples, one or more I/O devices 306 include at least one of a keyboard, a mouse, a touchpad, a joystick, one or more microphones, one or more speakers, one or more image sensors, one or more displays, and/or the like.

Memory 320 includes high-speed random-access memory, such as dynamic random-access memory (DRAM), static random-access memory (SRAM), double-data-rate random-access memory (DDR RAM), or other random-access solid-state memory devices. In some examples, memory 320 includes non-volatile memory, such as one or more magnetic disk storage devices, optical disk storage devices, flash memory devices, or other non-volatile solid-state storage devices. Memory 320 optionally includes one or more storage devices remotely located from the one or more processing units 302. Memory 320 comprises a non-transitory computer-readable storage medium. In some examples, memory 320 or the non-transitory computer-readable storage medium of memory 320 stores the following programs, modules and data structures, or a subset thereof, including an optional operating system 330 and three-dimensional (3D) experience module 340.

Operating system 330 includes instructions for handling various basic system services and for performing hardware-dependent tasks.

In some examples, three-dimensional (3D) experience module 340 is configured to manage and coordinate the user experience provided by computer system 101 with respect to a three-dimensional scene. For example, 3D experience module 340 is configured to obtain data corresponding to the three-dimensional scene (e.g., data generated by computer system 101 and/or data from data obtaining unit 341 discussed below) to cause computer system 101 to perform actions for the user (e.g., provide suggestions, display content, etc.) based on the data. To that end, in various examples, 3D experience module 340 includes data obtaining unit 341, tracking unit 342, coordination unit 346, data transmission unit 348, digital assistant (DA) unit 350, image evaluation unit 370, region tracking unit 380, and visibility analysis unit 390.

In some examples, data obtaining unit 341 is configured to obtain data (e.g., presentation data, interaction data, sensor data, location data, etc.) from one or more of user-facing component 120, input devices 125, output devices 155, sensors 190, and peripheral devices 195. To that end, in various examples, data obtaining unit 341 includes instructions and/or logic therefor, and heuristics and metadata therefor.

In some examples, tracking unit 342 is configured to map scene 105 and to track the position/location of the user (and/or of a portable device being held or worn by the user). To that end, in various examples, tracking unit 342 includes instructions and/or logic therefor, and heuristics and metadata therefor.

In some examples, tracking unit 342 includes eye tracking unit 343. Eye tracking unit 343 includes instructions and/or logic for tracking the position and movement of the user's gaze (or more broadly, the user's eyes, face, or head) using data obtained from eye tracking device 130. In some examples, eye tracking unit 343 tracks the position and movement of the user's gaze relative to a physical environment, relative to the user (e.g., the user's hand, face, or head), relative to a device worn or held by the user, and/or relative to content displayed by user-facing component 120.

Eye tracking device 130 is controlled by eye tracking unit 343 and includes various hardware and/or software components configured to perform eye tracking techniques. For example, eye tracking device 130 includes at least one eye tracking camera (e.g., infrared (IR) or near-IR (NIR) cameras) and illumination sources (e.g., IR or NIR light sources such as an array or ring of LEDs) that emit light (e.g., IR or NIR light) towards the user's eyes. The eye tracking cameras may be pointed towards the user's eyes to receive reflected IR or NIR light from the light sources directly from the eyes, or alternatively may be pointed towards mirrors that reflect IR or NIR light from the eyes to the eye tracking cameras. Eye tracking device 130 optionally captures images of the user's eyes (e.g., as a video stream captured at 60-120 frames per second), analyzes the images to generate eye tracking information, and communicates the eye tracking information to eye tracking unit 343. In some examples, two eyes of the user are separately tracked by respective eye tracking cameras and illumination sources. In some examples, only one eye of the user is tracked by a respective eye tracking camera and illumination sources.

In some examples, tracking unit 342 includes hand tracking unit 344. Hand tracking unit 344 includes instructions and/or logic for tracking, using hand tracking data obtained from hand tracking device 140, the position of one or more portions of the user's hands and/or motions of one or more portions of the user's hands. Hand tracking unit 344 tracks the position and/or motion relative to scene 105, relative to the user (e.g., the user's head, face, or eyes), relative to a device worn or held by the user, relative to content displayed by user-facing component 120, and/or relative to a coordinate system defined relative to the user's hand. In some examples, hand tracking unit 344 analyzes the hand tracking data to identify a hand gesture (e.g., a pointing gesture, a pinching gesture, a clenching gesture, and/or a grabbing gesture) and/or to identify content (e.g., physical content or virtual content) corresponding to the hand gesture, e.g., content selected by the hand gesture. In some examples, a hand gesture is an air gesture. An air gesture is a gesture that is detected without the user touching (or independently of) an input element that is part of a device (e.g., computer system 101, one or more input devices 125, hand tracking device 140, device 500, device 1000, and/or device 1062) and is based on detected motion of a portion (e.g., the head, one or more arms, one or more hands, one or more fingers, and/or one or more legs) of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

Hand tracking device 140 is controlled by hand tracking unit 344 and includes various hardware and/or software components configured to perform hand tracking and hand gesture recognition techniques. For example, hand tracking device 140 includes one or more image sensors (e.g., one or more IR cameras, 3D cameras, depth cameras, and/or color cameras, etc.) that capture three-dimensional information (e.g., a depth map) that represents a hand of a human user. The one or more image sensors capture the hand images with sufficient resolution to distinguish the fingers and their respective positions. In some examples, the one or more image sensors project a pattern of spots onto an environment that includes the hand and capture an image of the projected pattern. In some examples, the one or more image sensors capture a temporal sequence of the hand tracking data (e.g., captured three-dimensional information and/or captured images of the projected pattern) and hand tracking device 140 communicates the temporal sequence of the hand tracking data to hand tracking unit 344 for further analysis, e.g., to identify hand gestures, hand poses, and/or hand movements.

In some examples, hand tracking device 140 includes one or more hardware input devices configured to be worn and/or held by (or be otherwise attached to) one or more respective hands of the user. In such examples, hand tracking unit 344 tracks the position, pose, and/or motion of a user's hand based on tracking the position, pose, and/or motion of the respective hardware input device. Hand tracking unit 344 tracks the position, pose, and/or motion of the respective hardware input device optically (e.g., via one or more image sensors) and/or based on data obtained from sensor(s) (e.g., accelerometer(s), magnetometer(s), gyroscope(s), inertial measurement unit(s), and the like) contained within the hardware input device. In some examples, the hardware input device includes one or more physical controls (e.g., button(s), touch-sensitive surface(s), pressure-sensitive surface(s), knob(s), joystick(s), and the like). In some examples, instead of, or in addition to, performing a particular function in response to detecting a respective type of hand gesture, computer system 101 analogously performs the particular function in response to a user input that selects a respective physical control of the hardware input device. For example, computer system 101 interprets a pinching hand gesture input as a selection of an in-focus element and/or interprets selection of a physical button of the hardware device as a selection of the in-focus element.

In some examples, coordination unit 346 is configured to manage and coordinate the experience provided to the user via user-facing component 120, one or more output devices 155, and/or one or more peripheral devices 195. To that end, in various examples, coordination unit 346 includes instructions and/or logic therefor, and heuristics and metadata therefor.

In some examples, data transmission unit 348 is configured to transmit data (e.g., presentation data, location data, etc.) to user-facing component 120, one or more input devices 125, output devices 155, sensors 190, and/or peripheral devices 195. To that end, in various examples, data transmission unit 348 includes instructions and/or logic therefor, and heuristics and metadata therefor.

Digital assistant (DA) unit 350 includes instructions and/or logic for providing DA functionality to computer system 101. DA unit 350 therefore provides a user of computer system 101 with DA functionality while they and/or their avatar are present in a three-dimensional scene. For example, the DA performs various tasks related to the three-dimensional scene, either proactively or upon request from the user. In some examples, DA unit 350 performs at least some of: converting speech input into text (e.g., using speech-to-text (STT) processing unit 352); identifying a user's intent expressed in a natural language input received from the user; actively eliciting and obtaining information needed to fully satisfy the user's intent (e.g., by disambiguating terms in the natural language input and/or by obtaining information from data obtaining unit 341); determining a task flow for fulfilling the identified intent; and executing the task flow to fulfill the identified intent.

In some examples, DA unit 350 includes natural language processing (NLP) unit 351 configured to identify the user intent. NLP unit 351 takes the n-best candidate text representation(s) (word sequence(s) or token sequence(s)) generated by STT processing unit 352 and attempts to associate each of the candidate text representations with one or more user intents recognized by the DA. In some examples, a user intent represents a task that can be performed by the DA and has an associated task flow implemented in task flow processing unit 353. The associated task flow is a series of programmed actions and steps that the DA takes in order to perform the task. The scope of a DA's capabilities is, in some examples, dependent on the number and variety of task flows that are implemented in task flow processing unit 353, or in other words, on the number and variety of user intents the DA recognizes.

In some examples, once NLP unit 351 identifies a user intent based on the user request, NLP unit 351 causes task flow processing unit 353 to perform the actions required to satisfy the user request. For example, task flow processing unit 353 executes the task flow corresponding to the identified user intent to perform a task to satisfy the user request. In some examples, performing the task includes causing computer system 101 to provide output (e.g., graphical, audio, and/or haptic output) indicating the performed task.

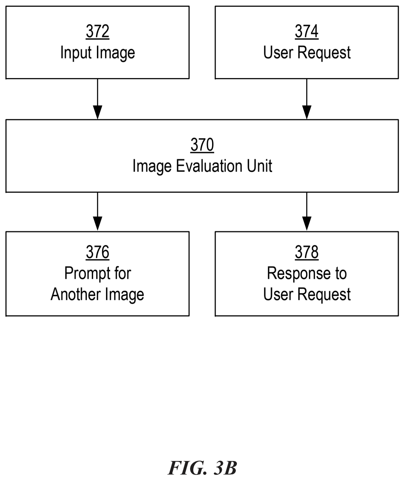

Image evaluation unit 370 receives input image 372 and user request 374 to determine prompt 376 and/or response 378, as shown in FIG. 3B. In some examples, image evaluation unit 370 is included DA unit 350. In some examples, some or all of the functions of image evaluation unit 370 discussed below are performed by and/or in conjunction with DA unit 350.

Image evaluation unit 370 obtains (e.g., receives and/or captures) input image 372 (e.g., an image including an environment, an image including an object, an image including a person, and/or an image including any combination of an environment, object, and/or a person) using one or more image sensors of device 101 such as image sensors 214 and receives user request 374 related to input image 372 with one or more sensors of device 101 such as a microphone, a touch-sensitive display, and/or other sensors capable of receiving user speech and/or text input. In some examples, user request 374 includes a task to be executed based on content included in input image 372. In some examples, user request 374 includes a request for data related to content included in input image 372.

In some examples, the one or more image sensors are a part of the same computer system and/or device as image evaluation unit 370 (e.g., are at least partially inside of the computer system and/or are directly connected to the computer system). In some examples, the one or more image sensors are a part of another computer system. In some examples, at least one image sensor is a part of the computer system that includes image evaluation unit 370. In some examples, at least one image sensor is a part of another computer system. In some examples, at least one image sensor is a forward-facing camera of the computer system (e.g., the camera faces a front of the computer system) that includes image evaluation unit 370. In some examples, at least one image sensor is a backward facing camera of the computer system (e.g., the camera faces the back of the computer system) that includes image evaluation unit 370.

In some examples, an image sensor of the computer system and/or device that includes image evaluation unit 370 is of a lower quality than an image sensor of another computer system and/or device that is connected to and/or in communication with the computer system and/or device that includes image evaluation unit 370. In some examples, an image sensor of the computer system and/or device that includes image evaluation unit 370 include at least one different characteristic (e.g., resolution, associated focal length, magnification, aperture, dynamic range, or the like) than an image sensor of another computer system and/or device that is connected to and/or in communication with the computer system and/or device that includes image evaluation unit 370.

Image evaluation unit 370 then determines a quality of input image 372 and determines whether the quality of input image 372 satisfies (e.g., meets) a quality criterion or does not satisfy (e.g., does not meet) the quality criterion.

In some examples, the quality of input image 372 is based on factors including a blurriness, a sharpness, a clarity, noise, an exposure, a tone, a contrast, distortion, vignetting, artifacts, and/or lens flare present in input image 372. In some examples, image evaluation unit 370 determines the quality of the input image 372 by processing the image to determine whether the factors discussed above are present and to what degree. In some examples, image evaluation unit 370 includes and/or uses one or more AI models to determine the quality of input image 372.

In some examples, the quality criterion is based on user request 374 and/or a task included in user request 374 (e.g., some tasks require a higher quality image than others). In some examples, in accordance with a determination that user request 374 includes a request of a first type, image evaluation unit 370 selects a first quality criterion as the quality criterion and in accordance with a determination that user request 374 includes a request of a second type different from the first type, image evaluation unit 370 selects a second quality criterion different from the first quality criterion as the quality criterion. For example, when image evaluation unit 370 determines that the task of user request 374 is a task that requires a large amount of information from input image 372, image evaluation unit 370 selects a quality criterion that the quality of the image be relatively high (e.g., is not blurry, is sharp, is clear, does not have a lot of noise, is not distorted, etc.), but when image evaluation unit 370 determines that the task of user request 374 is a task that requires a small amount of information from input image 372, image evaluation unit 370 selects a quality criterion that the quality of the image be relatively low (e.g., can be somewhat blurry, does not have to be completely clear, can include noise and/or some distortion, etc.).

In some examples, image evaluation unit 370 provides input image 372 to a large language model (LLM) or other AI model and requests that the LLM or other AI model determine a quality of input image 372. In some examples, image evaluation unit 370 provides input image 372 to a large language model (LLM) or other AI model and requests that the LLM or other AI model provide a determination of whether input image 372 is of sufficient quality to complete a task determined from user request 374.

In some examples, image evaluation unit 370 determines a quality of input image 372 by generating an embedding of input image 372 and comparing the embedding of input image 372 to a learned set of embeddings representing a high quality image or a low quality image. In some examples, image evaluation unit 370 determines a quality of input image 372 by generating an embedding of input image 372 and providing the embedding of input image 372 to a LLM or other AI model. Image evaluation unit 370 then requests that the LLM or other AI model compare the provided embedding to other embeddings of various quality images to determine the quality of input image 372. In some examples, image evaluation unit 370 selects a learned set of embedding based on a type of request include in user request 374. For example, when image evaluation unit 370 determines that the task of user request 374 is a task that requires a large amount of information from input image 372, image evaluation unit 370 selects a set of embeddings that represents images of a high quality, but when image evaluation unit 370 determines that the task of user request 374 is a task that requires a small amount of information from input image 372, image evaluation unit 370 selects a set of embeddings that represents images of a low quality.

In some examples, image evaluation unit 370 provides input image 372 to an artificial intelligence (AI) model and/or other model for executing user request 374. When a confidence of a result of executing user request 374 determined by the model is sufficiently high (e.g., satisfies a criterion for performing the task) then input image 372 is of sufficient quality to perform the task. When a confidence of the result of executing user request 374 determined by the model is not sufficiently high (e.g., does not satisfy the criterion for performing the task) then input image 372 is not of sufficient quality to perform the task. In some examples, the confidence of the result of executing user request 374 is provided to image evaluation unit 370 and image evaluation unit 370 utilizes the confidence of the result to determine whether another picture should be taken and/or whether a camera of another device should be opened (e.g., launched, activated, invoked, etc.)

When image evaluation unit 370 determines that the quality of input image 372 satisfies the quality criterion, image evaluation unit 370 generates response 378 to user request 374 based on input image 372 (e.g., by utilizing the capabilities of DA unit 350 to determine a user intent and perform one or more actions to satisfy user request 374) and provides an output including response 378. In some examples, image evaluation unit 370 determines that the quality of input image 372 satisfies the quality criterion when the computer system and/or digital assistant is able to determine a response to the user request because the quality of the first image is high.

In some examples, response 378 to user request 374 includes an output that a task has been completed, a response to a request for information, and/or a follow-up prompt for further information related to user request 374. In some examples, the output of response 378 is an audio output and/or an output on a display in communication with the computer system.

When image evaluation unit 370 determines that the quality of input image 372 does not satisfy the quality criterion, image evaluation unit 370 generates prompt 376 to capture a second input image and causes another computer system and/or electronic device that is or is not physically connected to device 101 to provide prompt 376 to capture the second input image with a sensor of the another computer system and/or electronic device. In some examples, image evaluation unit 370 determines that the quality of input image 372 does not satisfy the quality criterion when image evaluation unit 370 determines that the computer system and/or a digital assistant is unable to determine a response to user request 374 because the quality of input image 372 is too low.

In some examples, prompt 376 includes an output including a request that another image be captured with an image sensor (e.g., a camera) of another computer system. In some examples, prompt 376 is provided as an output by device 101 (e.g., the same computer system that includes image evaluation unit 370). In some examples, prompt 376 is provided as an output by the another computer system. In some examples, prompt 376 is provided as an audio output. In some examples, prompt 376 is provided as a visual output. In some examples, prompt 376 is provided by a digital assistant associated with both computer systems. In some examples, the output is provided in a user interface associated with the digital assistant. In some examples, the output is provided in a user interface for a camera application. In some examples, the two devices and/or computer systems are in communication. In some examples, the two devices and/or computer systems are wirelessly connected e.g., via, Wi-Fi, Bluetooth, NFC, and/or other wireless communication protocols). In some examples, the two devices and/or computer systems are both associated with a same user and/or a same profile of the user. In some examples, the two devices are connected via a wire and/or other physical connection.

In some examples, after providing prompt 376 and/or causing another device and/or computer system to provide prompt 376, a user input to capture another input image is detected and in response to detecting the user input, the another input image is obtained (e.g., received and/or captured). Image evaluation unit 370 then determines a response to user request 374 based on the another input image that is obtained using the another device and/or computer system and provides an output including the response to user request 374. Thus, the user receives a response to user request 374 based on the information available to both devices and/or computer systems. In some examples, after detecting the user input to capture another input image, prompt 376 and/or another user interface ceases to be displayed.

In some examples, in response to detecting input image 372 and user request 374, image evaluation unit 370 determines whether a context of device 101 (e.g., the device and/or computer system that receives, captures, and/or obtains input image 372) indicates that input image 372 does not satisfy the quality criterion. The context of device 101 (e.g., the device and/or computer system that receives, captures, and/or obtains input image 372) is determined using data received from one or more sensors of the device that can include information representing a level of light around the device, a location of the device, the presence of objects in front of the image sensor of the device, movement of the device, the presence of text in front of the device, and/or other information relevant to the quality of input image 372. For example, data from sensors of the device can indicate that the device is in a dark room or that there is an object directly in front of a camera of the device and thus that input image 372 will be too dark and/or unfocused to retrieve information from.

In some examples, when image evaluation unit 370 determines that the context of the device indicates that input image 372 does not satisfy the quality criterion, image evaluation unit 370 forgoes determining whether input image 372 satisfies the quality criterion and provides prompt 376 at another computer system and/or device that is in communication with the device.

In some examples, 3D experience module 340 accesses one or more artificial intelligence (AI) models that are configured to perform various functions described herein. The AI model(s) are at least partially implemented on controller 110 (e.g., implemented locally on a single device, or implemented in a distributed manner) and/or controller 110 communicates with one or more external services that provide access to the AI model(s). In some examples, one or more components and functions of DA unit 350, image evaluation unit 370, region tracking unit 380, and/or visibility analysis unit 390 are implemented using the AI model(s). For example, DA unit 350 implements one or more AI models to perform speech recognition, intent determination (e.g., natural language processing and/or image processing), object recognition, and/or response generation, image evaluation unit 370 implements one or more AI models to determine whether an input image satisfies a quality criterion for determining a response to a user request and/or to determine a prompt for another image at another device and/or computer system, and/or visibility analysis unit 390 implements one or more AI models to determine (e.g., identify) occluded portions of captured image data.

In some examples, the AI model(s) are based on (e.g., are, or are constructed from) one or more foundation models. Generally, a foundation model is a deep learning neural network that is trained based on a large training dataset and that can adapt to perform a specific function. Accordingly, a foundation model aggregates information learned from a large (and optionally, multimodal) dataset and can adapt to (e.g., be fine-tuned to) perform various downstream tasks that the foundation model may not have been originally designed to perform. Examples of such tasks include language translation, speech recognition, user intent determination (e.g., natural language processing), sentiment analysis, computer vision tasks (e.g., object recognition and scene understanding), question answering, image generation, audio generation, and generation of computer-executable instructions. Foundation models can accept a single type of input (e.g., text data) or accept multimodal input, such as two or more of text data, image data, video data, audio data, sensor data, and the like. In some examples, a foundation model is prompted to perform a particular task by providing it with a natural language description of the task. Example foundation models include the GPT-n series of models (e.g., GPT-1, GPT-2, GPT-3, and GPT-4), DALL-E, and CLIP from Open AI, Inc., Florence and Florence-2 from Microsoft Corporation, BERT from Google LLC, and LLaMA, LLaMA-2, and LLaMA-3 from Meta Platforms, Inc.

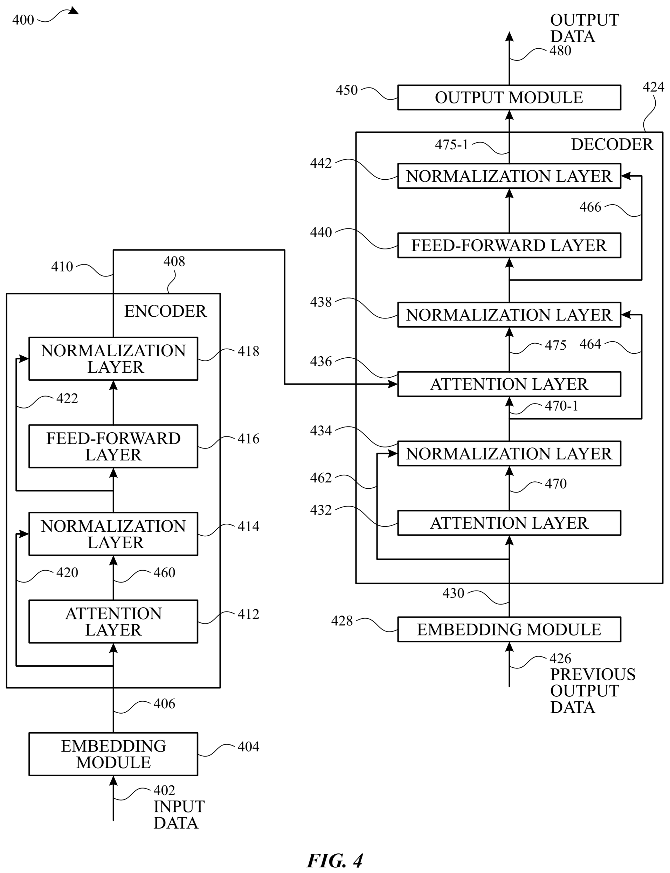

FIG. 4 illustrates architecture 400 for a foundation model, according to some examples. Architecture 400 is merely exemplary and various modifications to architecture 400 are possible. Accordingly, the components of architecture 400 (and their associated functions) can be combined, the order of the components (and their associated functions) can be changed, components of architecture 400 can be removed, and other components can be added to architecture 400. Further, while architecture 400 is transformer-based, one of skill in the art will understand that architecture 400 can additionally or alternatively implement other types of machine learning models, such as convolutional neural network (CNN)-based models and recurrent neural network (RNN)-based models.

Architecture 400 is configured to process input data 402 to generate output data 480 that corresponds to a desired task. Input data 402 includes one or more types of data, e.g., text data, image data, video data, audio data, sensor (e.g., motion sensor, biometric sensor, temperature sensor, and the like) data, computer-executable instructions, structured data (e.g., in the form of an XML file, a JSON file, or another file type), and the like. In some examples, input data 402 includes data from data obtaining unit 341. Output data 480 includes one or more types of data that depend on the task to be performed. For example, output data 480 includes one or more of: text data, image data, audio data, and computer-executable instructions. It will be appreciated that the above-described input and output data types are merely exemplary and that architecture 400 can be configured to accept various types of data as input and generate various types of data as output. Such data types can vary based on the particular function the foundation model is configured to perform.

Architecture 400 includes embedding module 404, encoder 408, embedding module 428, decoder 424, and output module 450, the functions of which are now discussed below.

Embedding module 404 is configured to accept input data 402 and parse input data 402 into one or more token sequences. Embedding module 404 is further configured to determine an embedding (e.g., a vector representation) of each token that represents each token in embedding space, e.g., so that similar tokens have a closer distance in embedding space and dissimilar tokens have a further distance. In some examples, embedding module 404 includes a positional encoder configured to encode positional information into the embeddings. The respective positional information for an embedding indicates the embedding's relative position in the sequence. Embedding module 404 is configured to output embedding data 406 of the input data by aggregating the embeddings for the tokens of input data 402.

Encoder 408 is configured to map embedding data 406 into encoder representation 410. Encoder representation 410 represents contextual information for each token that indicates learned information about how each token relates to (e.g., attends to) each other token. Encoder 408 includes attention layer 412, feed-forward layer 416, normalization layers 414 and 418, and residual connections 420 and 422. In some examples, attention layer 412 applies a self-attention mechanism on embedding data 406 to calculate an attention representation (e.g., in the form of a matrix) of the relationship of each token to each other token in the sequence. In some examples, attention layer 412 is multi-headed to calculate multiple different attention representations of the relationship of each token to each other token, where each different representation indicates a different learned property of the token sequence. Attention layer 412 is configured to aggregate the attention representations to output attention data 460 indicating the cross-relationships between the tokens from input data 402. In some examples, attention layer 412 further masks attention data 460 to suppress data representing the relationships between select tokens. Encoder 408 then passes (optionally masked) attention data 460 through normalization layer 414, feed-forward layer 416, and normalization layer 418 to generate encoder representation 410. Residual connections 420 and 422 can help stabilize and shorten the training and/or inference process by respectively allowing the output of embedding module 404 (i.e., embedding data 406) to directly pass to normalization layer 414 and allowing the output of normalization layer 414 to directly pass to normalization layer 418.

While FIG. 4 illustrates that architecture 400 includes a single encoder 408, in other examples, architecture 400 includes multiple stacked encoders configured to output encoder representation 410. Each of the stacked encoders can generate different attention data, which may allow architecture 400 to learn different types of cross-relationships between the tokens and generate output data 410 based on a more complete set of learned relationships.

Decoder 424 is configured to accept encoder representation 410 and previous output embedding 430 as input to generate output data 480. Embedding module 428 is configured to generate previous output embedding 430. Embedding module 428 is similar to embedding module 404. Specifically, embedding module 428 tokenizes previous output data 426 (e.g., output data 480 that was generated by the previous iteration), determines embeddings for each token, and optionally encodes positional information into each embedding to generate previous output embedding 430.

Decoder 424 includes attention layers 432 and 436, normalization layers 434, 438, and 442, feed-forward layer 440, and residual connections 462, 464, and 466. Attention layer 432 is configured to output attention data 470 indicating the cross-relationships between the tokens from previous output data 426. Attention layer 432 is similar to attention layer 412. For example, attention layer 432 applies a multi-headed self-attention mechanism on previous output embedding 430 and optionally masks attention data 470 to suppress data representing the relationships between select tokens (e.g., the relationship(s) between a token and future token(s)) so architecture 400 does not consider future tokens as context when generating output data 480. Decoder 424 then passes (optionally masked) attention data 470 through normalization layer 434 to generate normalized attention data 470-1.

Attention layer 436 accepts encoder representation 410 and normalized attention data 470-1 as input to generate encoder-decoder attention data 475. Encoder-decoder attention data 475 correlates input data 402 to previous output data 426 by representing the relationship between the output of encoder 408 and the previous output of decoder 424. Attention layer 436 allows decoder 424 to increase the weight of the portions of encoder representation 410 that are learned as more relevant to generating output data 480. In some examples, attention layer 436 applies a multi-headed attention mechanism to encoder representation 410 and to normalized attention data 470-1 to generate encoder-decoder attention data 475. In some examples, attention layer 436 further masks encoder-decoder attention data 475 to suppress the cross-relationships between select tokens.

Decoder 424 then passes (optionally masked) encoder-decoder attention data 475 through normalization layer 438, feed-forward layer 440, and normalization layer 442 to generate further-processed encoder-decoder attention data 475-1. Normalization layer 442 then provides further-processed encoder-decoder attention data 475-1 to output module 450. Similar to residual connections 420 and 422, residual connections 462, 464, and 466 may stabilize and shorten the training and/or inference process by allowing the output of a corresponding component to directly pass as input to a corresponding component.

While FIG. 4 illustrates that architecture 400 includes a single decoder 424, in other examples, architecture 400 includes multiple stacked decoders each configured to learn/generate different types of encoder-decoder attention data 475. This allows architecture 400 to learn different types of cross-relationships between the tokens from input data 402 and the tokens from output data 480, which may allow architecture 400 to generate output data 480 based on a more complete set of learned relationships.

Output module 450 is configured to generate output data 480 from further-processed encoder-decoder attention data 475-1. For example, output module 450 includes one or more linear layers that apply a learned linear transformation to further-processed encoder-decoder attention data 475-1 and a softmax layer that generates a probability distribution over the possible classes (e.g., words or symbols) of the output tokens based on the linear transformation data. Output module 450 then selects (e.g., predicts) an element of output data 480 based on the probability distribution. Architecture 400 then passes output data 480 as previous input data 426 to embedding module 428 to begin another iteration of the training and/or inference process for architecture 400.

It will be appreciated that various different AI models can be constructed based on the components of architecture 400. For example, some large language models (LLMs) (e.g., GPT-2 and GPT-3) are decoder-only (e.g., include one or more instances of decoder 424 and do not include encoder 408), some LLMs (e.g., BERT) are encoder-only (include one or more instances of encoder 408 and do not include decoder 424), and other foundation models (e.g., Florence-2) are encoder-decoder (e.g., include one or more instances of encoder 408 and include one or more instances of decoder 424). Further, it will be appreciated that the foundation models constructed based on the components of architecture 400 can be fine-tuned based on reinforcement learning techniques and training data specific to a particular task for optimization for the particular task, e.g., extracting relevant semantic information from image and/or video data, generating code, generating music, providing suggestions relevant to a specific user, and the like.

FIGS. 5A-5E illustrate capturing images in a multiple device system, according to some examples.

Devices 500 and 550 implement at least some of the components of computer system 101. For example, devices 500 and 550 include one or more sensors configured to detect data (e.g., image data and/or audio data) corresponding to the respective scenes. In some examples, device 500 and/or device 550 is an HMD (e.g., an XR headset or smart glasses) and FIGS. 5A-5E illustrate the user's view of the respective scenes via the HMD. For example, 5A-5E illustrate physical scenes viewed via pass-through video, physical scenes viewed via direct optical see-through, or virtual scenes viewed via one or more displays of the HMD. In other examples, device 500 and/or device 550 is another type of device, such as a smart watch, a smart phone, a tablet device, a laptop computer, a pair of display-less glasses, headphones, earbuds, or a projection-based device.

The examples of FIGS. 5A-5E illustrate that the user and devices 500 and 550 are present within the respective scenes. For example, the scenes are physical or extended reality scenes and the user and devices 500 and 550 are physically present within the scenes. In other examples, an avatar of the user is present within the scenes. For example, when the scenes are virtual reality scenes, the avatar of the user is present within the virtual reality scenes.

FIGS. 5A-5E include device 500 and device 550 which are both capable of obtaining (e.g., detecting and/or capturing) image data and receiving user inputs including user requests. In some examples, device 500 and device 550 are in communication but are not physically connected. In some examples, device 500 and device 550 are wirelessly connected (e.g., via Bluetooth, Wi-Fi, NFC, and/or other wireless communication protocols). In some examples, device 500 and device 550 are connected via a wire and/or other physical connection. In some examples, device 500 and device 550 are associated with a same user and/or a same user profile. In some examples, device 500 and device 550 are located near each other, without being physically connected.

In FIG. 5A, device 500 (e.g., a head mounted device, a smart phone, a tablet, a wearable computer system, a smart device, and/or a communal computer system) obtains (e.g., captures and/or receives) image 502a using one or more image sensors (e.g., a camera of device 500, a camera of a device connected to device 500, and/or a camera of a device in communication with device 500) that are in communication with device 500. In some examples, as shown in FIG. 5A, image 502a is displayed on a display and/or display generation component of device 500 and/or in communication with device 500. In some examples, device 500 has no display, image 502a is not displayed, and/or the scene is viewed directly by the user.

Device 500 also receives (e.g., detects, obtains, and/or captures) user request 504a related to image 502a. In some examples, user request 504a is detected prior to obtaining image 502a. In some examples, user request 504a is detected after obtaining image 502a. In some examples, user request 504a is detected simultaneously or substantially simultaneously to obtaining image 502a.

In response to obtaining image 502a and receiving user request 504a, device 500 determines whether a quality of image 502a satisfies a quality criterion using image evaluation unit 370 as discussed above with reference to FIG. 3B. Device 500 determines that the quality of image 502a satisfies the quality criterion and thus determines response 506a and provides response 506a as an audio output. In particular, based on user request 504a of "what is that?" device 500 determines that the user is trying to identify an object of image 502a. Device 500 (e.g., using image evaluation unit 370) determines that the quality of image 502a is high enough that objects of image 502a can be identified and accordingly processes image 502a to determine that it includes a tree and further that it includes an oak tree. Device 500 then generates the response "that is an oak tree" and provides it as an audio output to respond to user request 504a.

Because device 500 determines that the quality of image 502a is high and thus meets the quality criterion, device 500 does not determine a prompt to capture another image and does not cause device 550 to provide a prompt or perform any other task. Thus, as shown in FIG. 5A, device 550 does not change or alter its display during the determination of response 506a.

In some examples, device 500 provides image 502a to device 550 and/or another device to determine whether a quality of image 502a satisfies a quality criterion using image evaluation unit 370 as discussed above with reference to FIG. 3B. Device 550 determines that the quality of image 502a satisfies the quality criterion and thus determines response 506a and causes device 500 to provide response 506a as an audio output. In particular, based on user request 504a of "what is that?" device 500 provides user request 504a to device 550 and device 550 determines that the user is trying to identify an object of image 502a. Device 550 (e.g., using image evaluation unit 370) determines that the quality of image 502a is high enough that objects of image 502a can be identified and accordingly processes image 502a to determine that it includes a tree and further that it includes an oak tree. Device 550 then generates the response "that is an oak tree" and causes device 550 to provide it as an audio output to respond to user request 504a.

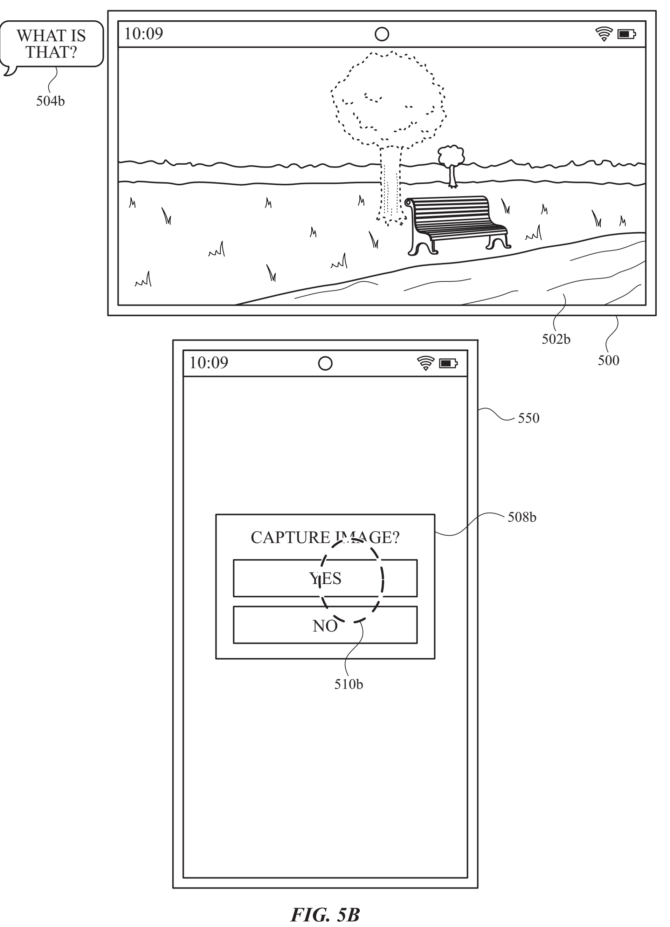

In FIG. 5B, device 500 obtains image 502b using one or more image sensors in communication with device 500. In some examples, image 502b is displayed on a display and/or display generation component of device 500 and/or in communication with device 500. In some examples, image 502b is not displayed, device 500 does not include a display, and/or the user views the scene directly.

Device 500 also receives (e.g., detects, obtains, and/or captures) user request 504b related to image 502b. In some examples, user request 504b is detected prior to obtaining image 502b. In some examples, user request 504b is detected after obtaining image 502b. In some examples, user request 504b is detected simultaneously or substantially simultaneously to obtaining image 502b.

In response to obtaining image 502b and receiving user request 504b, device 500 determines whether a quality of image 502b satisfies a quality criterion using image evaluation unit 370 as discussed above with reference to FIG. 3B. Device 500 determines that the quality of image 502b does not satisfy the quality criterion and thus determines prompt 508b. After determining (e.g., generating) prompt 508b, device 500 causes device 550 to provide prompt 508b. In particular, device 500 causes device 550 to display prompt 508b to capture another image because device 550 has a higher quality camera and thus is more likely to capture a higher quality image that will include information to determine a response to user request 504b.

In some examples, as discussed above with reference to FIG. 3B, device 500 determines that the quality of image 502b does not satisfy the quality criterion because image 502b is blurry, is not clear, has artifacts, is obscured, has noise, is distorted, and/or has other factors lowering the quality of image 502b.

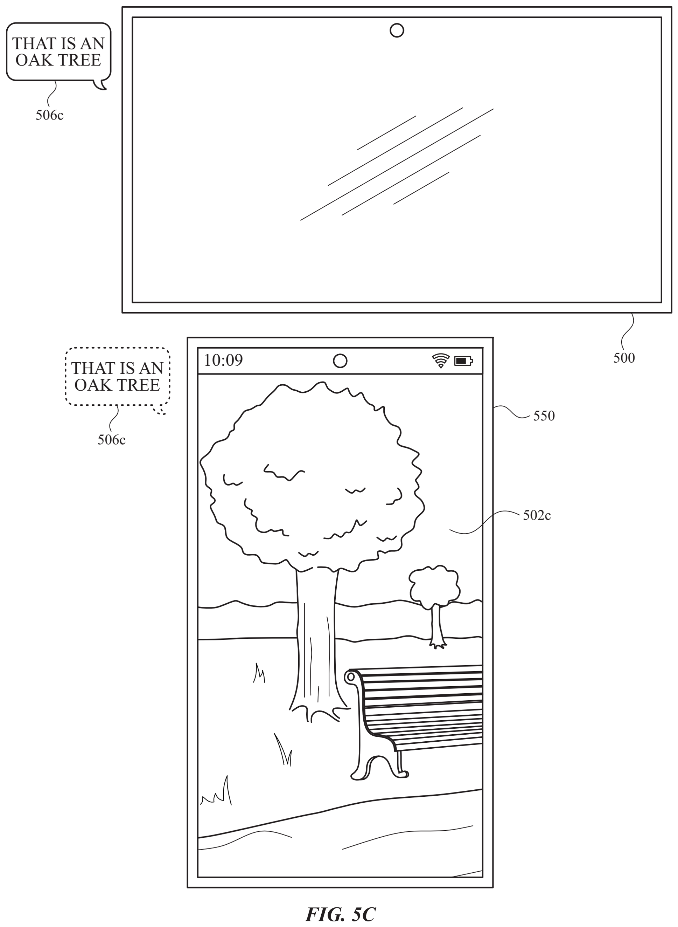

After causing device 550 to display prompt 508b, device 550 and/or device 500 detect user input 510b on the "yes" button of prompt 508b. In response to detecting input 510b, device 550 obtains (e.g., captures and/or receives) image 502c as shown in FIG. 5C. After obtaining image 502c, device 550 provides image 502c and/or data representing image 502c to device 500 so that device 500 can determine response 506c to user request 504b. Device 500 then determine response 506c and provides response 506c as an audio output.

In some examples, device 550 provides response 506c as an audio output instead of device 500. In some examples, device 500 and/or device 550 displays response 506c on a display of device 500 and/or device 550 and/or a display generation component in communication with device 500 and/or device 550. In some examples, after detecting user input 510b, device 500 ceases to display image 502b as shown in FIG. 5C.

In some examples, device 550 provides response 506c as an audio output instead of device 500. In some examples, device 500 and/or device 550 displays response 506c on a display of device 500 and/or device 550 and/or a display generation component in communication with device 500 and/or device 550. In some examples, after detecting user input 510b, device 500 ceases to display image 502b as shown in FIG. 5C.

In some examples, in response to obtaining image 502b and receiving user request 504b, device 500 provides image 502b and user request 504b to device 550 and causes device *550* to determine whether a quality of image 502b satisfies a quality criterion using image evaluation unit 370 as discussed above with reference to FIG. 3B. Device 550 determines that the quality of image 502b does not satisfy the quality criterion and thus determines prompt 508b. After determining (e.g., generating) prompt 508b, device 550 provides prompt 508b. In particular, prompt 508b includes a prompt to capture another image because device 550 has a higher quality camera and thus is more likely to capture a higher quality image that will include information to determine a response to user request 504b.

In some examples, as discussed above with reference to FIG. 3B, device 550 determines that the quality of image 502b does not satisfy the quality criterion because image 502b is blurry, is not clear, has artifacts, is obscured, has noise, is distorted, and/or has other factors lowering the quality of image 502b.

After device 550 displays prompt 508b, device 550 and/or device 500 detect user input 510b on the "yes" button of prompt 508b. In response to detecting input 510b, device 550 obtains (e.g., captures and/or receives) image 502c as shown in FIG. 5C. After obtaining image 502c, device 550 determines response 506c to user request 504b. Device 550 then determines response 506c and provides response 506c as an audio output and/or provides response 506c to device 500 to be provided as an audio output.

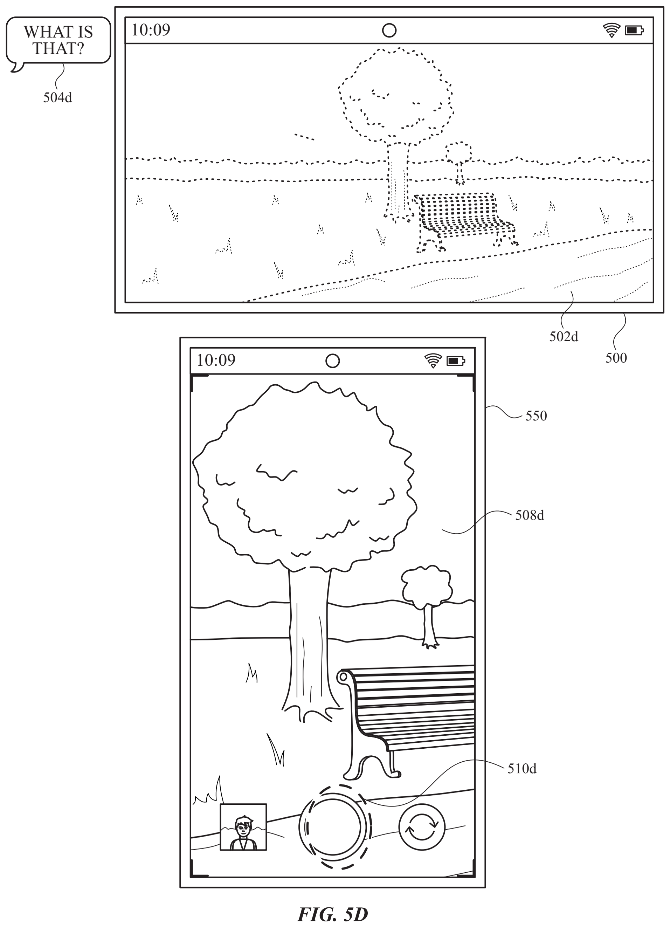

In FIG. 5D, device 500 obtains image 502d using one or more image sensors in communication with device 500. In some examples, image 502d is displayed on a display and/or display generation component of device 500 and/or in communication with device 500. In some examples, device 500 does not have a display, image 502d is not displayed, and/or the scene is viewed directly by a user of device 500.

Device 500 also receives (e.g., detects, obtains, and/or captures) user request 504d related to image 502d. In some examples, user request 504d is detected prior to obtaining image 502d. In some examples, user request 504d is detected after obtaining image 502d. In some examples, user request 504d is detected simultaneously or substantially simultaneously to obtaining image 502d.

In response to obtaining image 502d and receiving user request 504d, device 500 determines that a context of the device 500 indicates that image 502d does not satisfy the quality criterion using image evaluation unit 370 as discussed above with reference to FIG. 3B. In particular, device 500 determines that device 500 is moving based on data received from one or more sensors of device 500 while capturing image 502d. Accordingly, device 500 forgoes determining whether the quality of image 502d satisfies the quality criterion and determines prompt 508d of opening a camera application user interface. After determining (e.g., generating) prompt 508d, device 500 causes device 550 to provide prompt 508d by causing the camera application of device 550 to open and display the user interface of the camera application. In particular, device 500 causes device 550 to open the camera application (e.g., display prompt 508d) to capture another image because device 550 has a higher quality camera and thus is more likely to capture a higher quality image that will include information to determine a response to user request 504d.

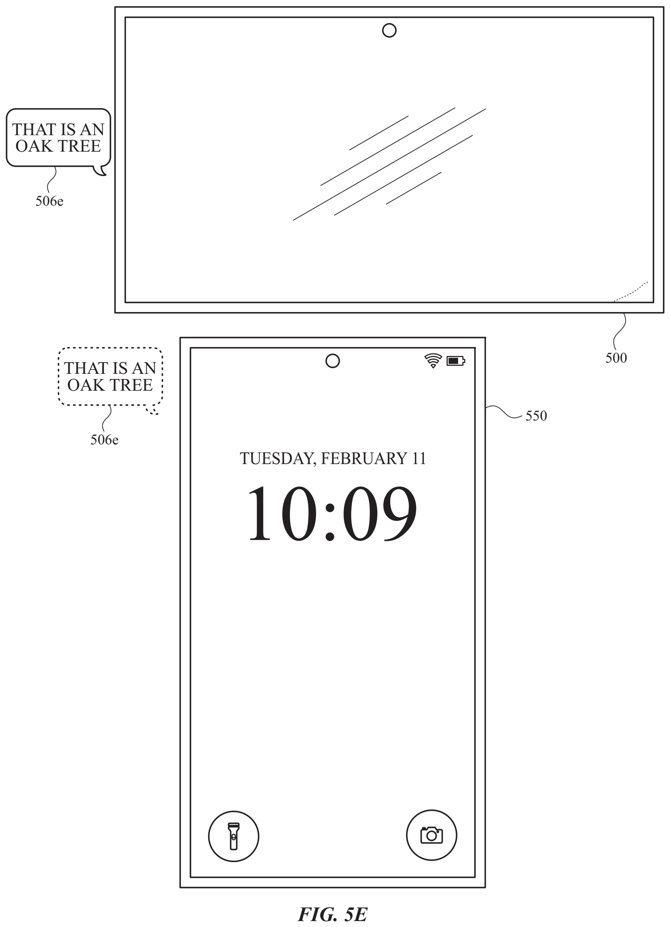

After causing device 550 to display prompt 508d, device 550 and/or device 500 detect user input 510d on the capture button of the camera user interface. In response to detecting input 510d, device 550 obtains (e.g., captures and/or receives) an image and provides the image and/or data representing the image to device 500 so that device 500 can determine response 506e to user request 504d. Device 500 then determines response 506e and provides response 506e as an audio output as shown in FIG. 5E.

In some examples, device 550 provides response 506e as an audio output instead of device 500. In some examples, device 500 and/or device 550 displays response 506e on a display of device 500 and/or device 550 and/or a display generation component in communication with device 500 and/or device 550. In some examples, after detecting user input 510d, device 500 ceases to display image 502d as shown in FIG. 5E. In some examples, after detecting user input 510d, device 550 ceases to display prompt 508d and/or ceases to display the camera user interface and instead displays a lock screen, as shown in FIG. 5E. Thus, in some examples, device 550 does not display the image that is captured in response to detecting user input 510d and instead provides the image that is captured and/or data corresponding to the image without displaying the image.

In some examples, in response to obtaining image 502d and receiving user request 504d, device 500 provides image 502d and user request 504d to device 550 and device 550 determines that a context of the device 500 indicates that image 502d does not satisfy the quality criterion using image evaluation unit 370 as discussed above with reference to FIG. 3B. In particular, device 550 determines that device 500 is moving based on data received from one or more sensors of device 500 and/or device 550 while device 500 is capturing image 502d. Accordingly, device 550 forgoes determining whether the quality of image 502d satisfies the quality criterion and determines prompt 508d of opening a camera application user interface. After determining (e.g., generating) prompt 508d, device 550 provides prompt 508d by opening (e.g., launching, activating, and/or invoking) the camera application of device 550 to open and display the user interface of the camera application. In particular, device 550 opens the camera application (e.g., display prompt 508d) to capture another image because device 550 has a higher quality camera and thus is more likely to capture a higher quality image that will include information to determine a response to user request 504d.

After device 550 displays prompt 508d, device 550 and/or device 500 detect user input 510d on the capture button of the camera user interface. In response to detecting input 510d, device 550 obtains (e.g., captures and/or receives) an image and determines response 506e to user request 504d. Device 550 then provides response 506e as an audio output.

While the above examples are discussed from the point of view of device 500 receiving the first image and determining whether the quality of the first image satisfies the quality criterion, it will be understood that device 550 can also receive the first image and determine whether the quality of the first image satisfies the quality criterion. Similarly, one device, such as device 500, can capture the image and another device, such as device 550, can determine whether the quality of the image satisfies the quality criterion. Thus, the steps of capturing the images, determining whether the quality satisfies a criterion, and/or causing a prompt to be displayed on the other device can be performed by any of the devices in the system. Similarly, while the above examples discuss two devices in the system, the system can include three, four, five, or any other number of devices that are connected and/or in communication wirelessly to exchange data including captured images and determinations of whether the quality of the images satisfies the quality criterion.

Additional descriptions regarding FIGS. 5A-5E are provided below in reference to method 600 described below with respect to FIG. 6.

FIG. 6 is a flow diagram of a method 600 for capturing images in a multiple device system. In some examples, method 600 is performed at a first computer system (e.g., computer system 101 in FIG. 1, device 500, and/or device 550) that is in communication with one or more image sensors (e.g., image sensors, light sensors, and/or photo sensors). In some examples, method 600 is governed by instructions that are stored in a non-transitory (or transitory) computer-readable storage medium and that are executed by one or more processors of a computer system, such as the one or more processing unit(s) 302 of computer system 101 (e.g., controller 110 in FIG. 1). In some examples, the operations of method 600 are distributed across multiple computer systems, e.g., a computer system and a separate server system. Some operations in method 600 are, optionally, combined, the orders of some operations are, optionally, changed, and some operations are, optionally, omitted.

At block 602, a first image (e.g., 372, 502a, 502b, and/or 502d) is obtained using the one or more image sensors.

At block 604, a user request (e.g., 374, 504a, 504b, and/or 504d) related to the first image is received.

At block 608, in response to (606) obtaining the first image and receiving the user request, in accordance with a determination (e.g., by image evaluation unit 370) that a quality of the first image does not satisfy a quality criterion, a prompt (e.g., 376, 508b, and/or 508d) to capture a second image (e.g., 372, 502a, 502b, and/or 502d) with a second computer system (e.g., computer system 101 in FIG. 1, device 500, and/or device 550) is caused to be provided at the second computer system.

At block 612, in response to (606) obtaining the first image and receiving the user request, in accordance (610) with a determination (e.g., by image evaluation unit 370) that the quality of the first image satisfies the quality criterion, a response (e.g., 378, 506a, 506c, and/or 506e) to the user request is generated based on the first image.

At block 614, in accordance (610) with the determination that the quality of the first image satisfies the quality criterion, an output including the response to the user request based on the first image is provided.

In some examples, the first computer system is a head mounted electronic device and the second computer system is a smart phone. In some examples, an image sensor of the first computer system is a lower quality image sensor than an image sensor of the second computer system.

In some examples, method 600 further includes: in response to detecting the first image and receiving the user request: in accordance with a determination that the user request includes a request of a first type, selecting a first quality criterion as the quality criterion; and in accordance with a determination that the user request includes a request of a second type different from the first type, selecting a second quality criterion different from the first quality criterion as the quality criterion.

In some examples, method 600 further includes: after causing a second computer system to provide a prompt to capture a second image with the second computer system:
detecting a user input to capture the second image with the second computer system; generating a response to the user request based on the second image; and providing an output including the response to the user request based on the second image.

In some examples, the determination of whether the quality of the first image satisfies the quality criterion comprises providing a prompt to a large language model (LLM), wherein the prompt includes a request of whether the first image is of sufficient quality to complete a task determined from the user request.

In some examples, the determination of whether the quality of the first image satisfies the quality criterion comprises: generating an embedding of the first image; and comparing the embedding of the first image to a learned set of embeddings representing a highquality image or a low-quality image.

In some examples, method 600 further includes: in accordance with a determination that the user request is a request of a first type, selecting a first learned set of embeddings as the learned set of embeddings; and in accordance with a determination that the user request is a request of a second type, selecting a second learned set of embeddings as the learned set of embeddings.

In some examples, method 600 further includes: in response to detecting the first image and receiving the user request: in accordance with a determination that a context of the first computer system indicates that the first image does not satisfy the quality criterion: forgoing determining whether the first image satisfies the quality criterion; and causing the second computer system to provide the prompt to capture the second image with the second computer system.

In some examples, the determination that the context of the first computer system indicates that the first image does not satisfy the quality criterion includes a determination that the first computer system is moving. In some examples, the determination that the context of the first computer system indicates that the first image does not satisfy the quality criterion includes a determination that an illumination level of an environment of the first computer system is below an illumination threshold. In some examples, the determination that the context of the first computer system indicates that the first image does not satisfy the quality criterion includes a determination that the one or more image sensors are obscured. In some examples, the determination that the context of the first computer system indicates that the first image does not satisfy the quality criterion includes a determination that a field of view of the one or more image sensors includes text.

In some examples, method 600 further includes: in accordance with a determination that a quality of the first image does not satisfy the quality criterion, causing a camera user interface to be displayed with a display generation component in communication with the second computer system.

In some examples, method 600 further includes: after causing the camera user interface to be displayed with the display generation component in communication with the second computer system: detecting a user input to capture the second image; and in response to detecting the user input to capture the second image, ceasing to display the camera user interface with the display generation component in communication with the second computer system.

In some examples, the camera user interface is displayed on a lock screen with the display generation component in communication with the second computer system.

In some examples, the second computer system and the first computer system are not physically connected. In some examples, the second computer system and the first computer system are physically connected by a wire and are not located in a same housing.

Returning to FIG. 3A, region tracking unit 380 and visibility analysis unit 390 are configured to determine a region of interest within a 3D scene and to determine a visibility metric that represents the amount of the region of interest that is represented by captured image data. Visibility analysis unit 390 is further configured to cause a device (e.g., 1000 in FIGS. 10A-10G) to provide various outputs that depend on the visibility metric, as described below with respect to FIGS. 10A-10G.

Region tracking unit 380 is configured to determine and update a region of interest (e.g., 802, 808, 906, 916, 1012, or 1092 in FIGS. 8A-8B, 9A-9B, and 10A-10G) within a 3D scene in which a user is immersed. The region of interest may contain one or more objects (e.g., physical objects or virtual objects) for which the user may issue corresponding user requests, e.g., "what is this?", "how much does this cost?," "add this to my shopping list," and the like.

In some examples, the region of interest is forward-facing relative to the user's head pose (the position and orientation of the user's head). For example, the region of interest is in front of the user's head (e.g., in front of the user's face) and the user can view the region of interest without changing their current head pose. Because the region of interest is forward-facing relative to the user's head pose, the region of interest (e.g., the position of the region of interest within the 3D scene) changes as the user's head pose changes, e.g., as the user turns their head and/or as the user moves about. For example, as the user turns their head from looking straight ahead to looking upwards, the region of interest changes from being a region straight ahead of the user to being a region that is upwards relative to the user. As another example, as the user turns their head from looking rightwards to looking leftwards, the region of interest changes from being rightwards relative to the user to being leftwards relative to the user. As another example, if the user turns around by 180 degrees while maintaining a neutral head position, the region of interest changes from a region that was previously in front of the user to a region that is currently in front of the user (and that was previously behind the user). The region of interest is forward-facing relative to the user's head pose because the user is likely to refer to an object that is in front of their head when issuing a request related to an object in the 3D scene, e.g., "how much does this cost?".

In some examples, region tracking unit 380 determines the region of interest based on the respective positions and the respective orientations of two different devices (e.g., 1002 and 1004 in FIGS. 10A-10G). The positions and orientations are computed relative to the user (e.g., the head of the user, the face of the user, and/or the ears of the user), relative to a coordinate system that is centered between the two different devices, and/or relative to the 3D scene (e.g., relative to a reference point within the 3D scene (e.g., an object) or to a surface within the 3D scene (e.g., a bottom surface)). In some examples, the two different devices are concurrently worn by the user. For example, the two different devices are a first device (e.g., a first camera) that is worn on a first side of the user's head and a second device (e.g., a second camera) that is worn on an opposite second side of the user's head. In some examples, the first device is worn (e.g., by being physically housed in a device that is worn) in a first ear of the user (e.g., a left ear or a right ear) and the second device is worn (e.g., by being physically housed in a device that is worn) in a different second ear of the user (e.g., a left ear or a right ear). In some examples, the first device and the second device are physically housed in a single device (e.g., a headset or a pair of glasses) that is worn by the user, e.g., worn on the head of the user. For example, the first device is a first camera that is positioned on a first side of the single device (e.g., positioned near a right or left side of the user's head when the single device is worn on the user's head) and the second device is a second camera that is positioned on an opposite second side of the single device (e.g., positioned near a right or left side of the user's head when the single device is worn on the user's head).

FIG. 7 illustrates forward-facing head pose 702 determined based on pose 704 (position and orientation) of the first device and pose 706 (position and orientation) of the second device, according to some examples. As described below, region tracking unit 380 determines the region of interest based on forward-facing head pose 702. Forward-facing head pose 702 corresponds to user view cone 708 (e.g., 806 in FIG. 8A) that represents at least a portion of the user's view of the 3D scene when the user's head has forward-facing head pose 702. Pose 704 of the first device corresponds to first device view cone 710 that represents the view of the 3D scene captured by the camera of the first device when the first device has pose 704. Pose 706 of the second device corresponds to second device view cone 712 that represents the view of the 3D scene captured by the camera of the second device when the second device has pose 706.

In some examples, to determine the region of interest, region tracking unit 380 relies on a 6-degree of freedom (6DOF) relationship between poses 704 and 706 and forward-facing head pose 702. Specifically, based on 6DOF information (e.g., values for three spatial dimensions that indicate position and three angular dimensions that indicate orientation) for pose 704 of the first device and 6DOF information for pose 706 of the second device, region tracking unit 380 determines (e.g., approximates) the 6DOF information for forward-facing head pose 702. In some examples, the position of forward-facing head pose 702 that is determined based on the 6DOF relationship corresponds to (e.g., approximates) a position that is centered between the two eyes of the user. A position that is centered between the two eyes of the user may provide an accurate reference point from which the forward-facing region of interest is determined. In some examples, using the 6DOF relationship to determine forward-facing head pose 702 includes computing a relative relationship between the first and second devices (e.g., representing how the first and second devices are oriented and positioned relative to each other), computing a relative relationship between first device and the user (e.g., an ear of the user or the head of the user) (e.g., representing how the first device is positioned and oriented relative to the user), and computing a relative relationship between the second device and the user (e.g., an ear of the user or the head of the user) (e.g., representing how the second device is positioned and oriented relative to the user).

Sometimes, the respective orientations of the first and second devices (the orientations of poses 704 and 706) do not correspond to the orientation of forward-facing head pose 702 due to differing manners in which the first and second devices are worn. For example, a default manner of wearing the first and second devices (e.g., a default orientation of the first and second devices relative to the user's head and/or ears) may result in the first and second cameras pointing in approximately the same direction as forward-facing head pose 702 (e.g., as illustrated by view cones 710, 712, and 708 in FIG. 7). But a user sometimes wears the first and/or second devices in a non-default manner (e.g., rotated upwards, downwards, or to the side, relative to the user's head and/or ears) resulting in the first and/or second cameras pointing in respective directions different from the direction of forward-facing head pose 702. Accordingly, computing the relative relationship between the first device and the user and/or the relative relationship between the second device and the user allows region tracking unit 380 to determine whether the respective orientations of the first and second devices correspond to the orientation of forward-facing head pose 702 (e.g., when the user faces straight ahead and the first and second cameras also point straight ahead, when the user faces upwards and the first and second cameras also point upwards, and the like) or not (e.g., when the user faces straight ahead but the first and/or second cameras are rotated to point upwards, when the user faces upwards but the first and/or second cameras are rotated to point straight ahead, and the like).

FIGS. 8A-8B illustrate regions of interest (802 in FIG. 8A or 808 in FIG. 8B) that are determined based on forward-facing head pose 702, according to some examples.

In FIG. 8A, the head of user 800 has forward-facing head pose 702. Region tracking unit 380 defines region of interest 802 based on defining forward-facing view cone 806 that originates at the location of forward-facing head pose 702 and that is centered about forward-facing head pose 702. In some examples, forward-facing view cone 806 has predetermined dimensions that are defined by a first amount of angular deviation (e.g., ±30°) in a first dimension (e.g., the dimension that represents up and down in FIG. 8A) that is orthogonal to the orientation of forward-facing head pose 702 (e.g., as represented by the arrow) and a second amount of angular deviation (e.g., e.g., ±25°) in a second dimension (e.g., the dimension that represents left and right in FIG. 8A) that is orthogonal to both the orientation of forward-facing head pose 702 and to the first dimension, e.g., such that a slice of forward-facing view cone 806 is a circle or an ellipse. In this manner, forward-facing view cone 806 represents a region of the 3D scene that is considered to be in front of user 800 and the boundary of forward-facing view cone 806 approximates the boundary between the region of the 3D scene that is in front of user 800 and the region of the 3D scene that is in user 800's periphery. In some examples, region tracking unit 380 defines region of interest 802 (illustrated by the hatched lines) as the portion of forward-facing view cone 806 that is at least a predetermined distance 804 (e.g., 0.1 meters, 0.2 meters, 0.3 meters, 0.4 meters, or 0.5 meters) away from user 800 (e.g., user 800's head or user 800's face). Region of interest 802 is defined in the manner described above because user 800 is unlikely to issue a user request about an object that is too close to their face and because user 800 is unlikely to issue a user request about an object that is in their periphery.

In FIG. 8B, the head of user 800 has forward-facing head pose 702. Region tracking unit 380 defines region of interest 808 (illustrated by the hatched lines) based on forward-facing head pose 702 and a typical region for handheld objects. The typical region for handheld objects specifies a typical region (e.g., 1-sigma confidence region, a 2-sigma confidence region, or a 3-sigma confidence region), relative to an arbitrary user's forward-facing head pose, in which the arbitrary user holds an object in their hands when issuing a request about the object, e.g., "tell me about this object in my hand." In some examples, the typical region for handheld objects is determined via user studies and/or testing in which a group of users is asked to hold objects in their respective hands and to issue user requests about the objects. The typical region for the handheld objects is a typical distance away from the arbitrary user's head and/or face and has typical dimensions (e.g., length, width, depth, shape, or volume). Region tracking unit 380 defines region of interest 808 (illustrated by the hatched lines) based on the typical distance and typical dimensions of the typical region for handheld objects. Region tracking unit 380 further positions region of interest 808 based on the orientation of forward-facing head pose 702 (as represented by the arrow in FIG. 8B) (e.g., to intersect with the arrow, or to have a predetermined amount of angular deviation from the arrow). Region of interest 808 is defined in the manner described above to account for scenarios in which a user holds an object in their hand when issuing a request about the object.

Visibility analysis unit 390 is configured to determine a visibility metric that represents the amount of the region of interest (e.g., 802 and 808) that is depicted by captured image data. For example, a high visibility metric indicates that a relatively large amount of the region of interest is depicted by the captured image data and a low visibility metric indicates that a relatively small amount (or no amount) of the region of interest is depicted by the captured image data. As described below with respect to FIGS. 10A-10G, in response to receiving a user request (e.g., in the form of natural language input) related to an object in the 3D scene, visibility analysis unit 390 causes device 1000 to perform one or more actions that depend on the visibility metric. For example, if the visibility metric is high, a correct object for the user request is likely sufficiently visible (e.g., depicted) in the captured image data, so device 1000 provides an output that satisfies the user request (e.g., provides information about the correct object and/or performs a task based on the correct object). But if the visibility metric is low, the correct object for the user request may not be sufficiently visible in the captured image data, so device 1000 performs various actions so that the correct object is sufficiently visible in captured image data before providing an output that satisfies the user request (e.g., to avoid outputting an incorrect audio output for an incorrect object and/or to avoid outputting an error due to failure to identify the correct object).

In some examples, the visibility metric that is determined depends on the type of the natural language input that includes the user request. In some examples, visibility analysis unit 390 invokes the natural language processing capabilities of DA unit 350 to determine whether the natural language input is a first type (e.g., refers to an object in the user's hand) or is a second type (e.g., does not refer to an object in the user's hand). If the natural language input is the first type, visibility analysis unit 390 selects region of interest 808 (FIG. 8B) as the region of interest and determines the visibility metric for region of interest 808. If the natural language input is the second type, visibility analysis unit 390 selects region of interest 802 (FIG. 8A) as the region of interest and determines the visibility metric for region of interest 802. Accordingly, visibility analysis unit 390 can advantageously select the pertinent region of interest for which to determine the visibility metric based on the content of the natural language input. For example, it may be advantageous to determine how much of a region for handheld objects (e.g., 808) is visible when a user issues a request indicating that the object is in their hand, e.g., "how much does this object in my hand cost?" And even if the user issues a request about an object without indicating that the object is in their hand (e.g., "how much does this cost?"), it may still be advantageous to determine how much of a forward-facing region (e.g., 802) is visible, e.g., because the object is likely positioned within the forward-facing region.

In some examples, the image data is captured (e.g., concurrently captured) by two separate cameras, e.g., the first camera and the second camera described above with respect to region tracking unit 380. In examples in which the two separate cameras are worn on the sides (e.g., opposite sides) of a user's head (e.g., one camera worn in each ear), capturing the image data with two separate cameras may be desired in order to capture a complete view of the region of interest (e.g., 802 or 808). For example, a first camera alone cannot capture a complete view of the region of interest because a portion of the first camera's view of the 3D scene is occluded by the corresponding side of the user's head. Similarly, a second camera alone cannot capture the complete view of the region of interest because a portion of the second camera's view of the 3D scene is occluded by the corresponding side of the user's head. Accordingly, in some examples, the image data refers to a combination of two separate images (or two separate sets of images) that are each captured by a different respective camera.

FIGS. 9A-9B illustrate determination of the visibility metric for region of interest 802 or 808, according to some examples. Generally, visibility analysis unit 390 determines the visibility metric by determining an amount of overlap between the non-occluded region of the 3D scene that is depicted by the image data and the region of interest. For example, visibility analysis unit 390 identifies the pixels of the image data that represent a non-occluded view of the 3D scene and that also depict the region of interest. It will be appreciated that the image data may be occluded by the user's face, the user's hair, the user's clothes, the user's hands, by smudges on the camera(s), and the like. Visibility analysis unit 390 implements techniques known in the art to classify various portions of the image data as occluded on non-occluded (e.g., to identify the occluded pixels and the non-occluded pixels).

FIG. 9A illustrates an example in which visibility analysis unit 390 determines a relatively low visibility metric for region of interest 906 (e.g., 802 or 808). In FIG. 9A, camera region 902 represents the region of the 3D scene depicted by the image data, e.g., depicted by the image data if the image data were not occluded. In some examples, visibility analysis unit 390 determines camera region 902 based on poses 704 and 706 of two different devices, e.g., two different cameras. For example, visibility analysis unit 390 maps the 3D scene and uses poses 704 and 706 and the fields of view of the cameras to determine camera region 902.

In FIG. 9A, camera region 902 includes occlusion region 904 (illustrated by the horizontal hatching). Occlusion region 904 represents the portion of the 3D scene that is occluded in the image data. In FIG. 9A, visibility analysis unit 390 projects camera region 902 onto region of interest 906 (e.g., by using poses 702, 704, and 706, the known dimensions and position of region of interest 906, and the known dimensions of the fields of view of the cameras), to determine the correlation between camera region 902 and region of interest 906. For example, visibility analysis unit 390 identifies overlap region 908 (as illustrated by the vertical hatching) that represents the overlap between camera region 902 and region of interest 906 (e.g., how much of region of interest 906 is depicted by camera region 904 if the image data were not occluded). Visibility analysis unit 390 then identifies the portion of overlap region 908 that is not occluded as visibility region 910, e.g., the portion of overlap region 908 that has vertical hatching and does not have horizontal hatching. Visibility analysis unit 390 then determines the visibility metric based on the pixels of the image data that represent visibility region 910.

In some examples, different pixels that represent visibility region 910 have different weights with respect to determining the visibility metric. For example, the positive magnitude to which a pixel of visibility region 910 contributes to the visibility metric decreases as the pixel gets farther away from the center of region of interest 906 or 916, so that a pixel that represents a central portion of the region of interest 906 or 916 provides a greater positive contribution to the visibility score than a pixel that represents an edge portion of region of interest 906 or 916. For example, suppose that a same number of pixels depict region of interest 906. If the same number of pixels were to mostly depict the center portion of region of interest 906, the resulting visibility metric is higher than if the same number of pixels were to mostly depict an edge portion of region of interest 906.

In FIG. 9A, visibility analysis unit 390 determines a relatively low visibility metric because there are relatively few pixels that represent visibility region 910 and because the pixels that represent visibility region 910 have relatively low weight with respect to determining the visibility metric (e.g., because the pixels represent an edge portion of region of interest 906). The example of FIG. 9A results in a relatively low visibility metric due to significant occlusion of camera region 902 (as illustrated by the size of occlusion region 904 within camera region 902) and due to a relatively small amount of overlap between camera region 902 and region of interest 906. The small amount of overlap between camera region 902 and region of interest 906 may be because the orientation(s) of the camera(s) do not correspond to the orientation of the forward-facing pose of the user's head. For example, the small amount of overlap between regions 902 and 906 is because the user is looking straight ahead and the camera(s) are rotated upwards to capture an image of the region that is mostly above the user.

FIG. 9B illustrates an example in which visibility analysis unit 390 determines a relatively high visibility metric for region of interest 916 (e.g., 802 or 808). In FIG. 9B, camera region 912 represents the region of the 3D scene depicted by the image data, e.g., depicted by the image data if the image data were not occluded. Camera region 912 is analogous to camera region 902 and is determined in an analogous manner. Camera region 912 includes occlusion region 914 (illustrated by the horizontal hatching). Occlusion region 914 represents the portion of the 3D scene that is occluded in the image data. In FIG. 9B, analogous to FIG. 9A, visibility analysis unit 390 projects camera region 912 onto region of interest 916 to identify overlap region 918 (as illustrated by the vertical hatching) that represents the overlap between camera region 912 and region of interest 916 (e.g., how much of region of interest 916 camera region 912 depicts if the image data were not occluded). Visibility analysis unit 390 identifies the portion of overlap region 918 that is not occluded as visibility region 920 (the portion of overlap region 918 that has vertical hatching and does not have horizontal hatching). Visibility analysis unit 390 then determines the visibility metric based on the pixels of the image data that represent visibility region 920.

In FIG. 9B, visibility analysis unit 390 determines a relatively high visibility metric because there are relatively large number of pixels that represent visibility region 920 and because some pixels that represent visibility region 920 have relatively high weights with respect to determining the visibility metric (e.g., because the pixels represent the center portion of region of interest 916). The example of FIG. 9B results in a relatively high visibility metric due to the relatively small amount of occlusion in camera region 912 (as illustrated by the size of occlusion region 914 within camera region 912) and due to a relatively large amount of overlap between camera region 912 and region of interest 916. The large amount of overlap between camera region 912 and region of interest 916 may be because the orientation(s) of the camera(s) correspond to the orientation of the forward-facing pose of the user's head. For example, the large amount of overlap between camera region 912 and region of interest 916 is because the user is looking straight ahead and the camera(s) is/are also oriented (e.g., relative to the user's head) to face approximately straight ahead.

As described below with respect to FIGS. 10A-10G, visibility analysis unit 390 is configured to cause device 1000 to perform various actions based on whether the determined visibility metric satisfies a condition (e.g., a threshold). In some examples, the visibility metric satisfies the condition if the visibility metric is greater than or equal to the threshold and the visibility metric does not satisfy the condition if the visibility metric is less than the threshold.

FIGS. 10A-10G illustrate device 1000 performing various actions according to a determined visibility metric and in response to receiving a natural language input, according to some examples.

Device 1000 implements at least some of the components of computer system 101. In some examples, device 1000 includes one or more sensors configured to detect audio data (e.g., a natural language user request), one or more cameras configured to detect image data for which a visibility metric is determined, and one or more audio output devices (e.g., speakers) configured to provide audio output. In the examples of FIGS. 10A-10G, device 1000 is worn on the head of user 1010. For example, device 1000 is an XR headset, a pair of smart glasses, headphones, or a set of earbuds. In other examples, device 1000 is another type of device, such as a smart watch, a smart phone, a tablet device, a laptop computer, or a projection-based device.

In the example of FIGS. 10A-10G, device 1000 includes camera 1002 (e.g., a set of one or more cameras) and camera 1004 (e.g., a set of one or more cameras). Camera 1002 is proximate to (e.g., worn on) a first side of the head of user 1010 and camera 1004 is proximate to (e.g., worn on) an opposite second side of the head of user 1010. For example, camera 1002 is physically housed in a first device (e.g., a first earbud) that is worn on the first side of the head of user 1010 (e.g., worn in a first ear of user 1010) and camera 1004 is physically housed in a second device (e.g., a second earbud) that is worn on an opposite second side of the head of user 1010 (e.g., worn in an opposite second ear of user 1010).

In FIGS. 10A-10G, the left portion illustrates a coordinate system that defines lateral dimension *x*, height dimension y, and depth dimension *z*. FIGS. 10A-10G illustrate the coordinate system to define the relative directions up, down, right, left, forwards, and backwards in the context of FIGS. 10A-10G and relative to user 1010. Specifically, an object or region is upwards (e.g., above) relative to user 1010 if the object or region has a height coordinate *y* that is greater than the height coordinate *y*' of user 1010, an object or region is downwards (e.g., below) relative to user 1010 if the object or region has a height coordinate *y* that is less than the height coordinate *y*' of user 1010, an object or region is rightwards relative to user 1010 if the object or region has a lateral coordinate *x* that is greater than the lateral coordinate x' of user 1010, an object or region is leftwards relative to user 1010 if the object or region has a lateral coordinate *x* that is less than the lateral coordinate *x'* of user 1010, an object or region is forwards relative to user 1010 (e.g., in front of user 1010) if the object or region has a depth coordinate *z* that is greater than the depth coordinate *z'* of user 1010, and an object or region is backwards relative to user 1010 (e.g., behind user 1010) if the object or region has a depth coordinate *z* that is less than the depth coordinate *z'* of user 1010. In some examples, the height, lateral, and depth coordinates (*x', y', z'*) of user 1010 are the height, lateral, and depth coordinates of user 1010's head. In some examples, the height, lateral, and depth coordinates of user 1010 are the height, lateral, and depth coordinates of another part of user 1010, e.g., user 1010's face or chest.

In FIGS. 10A-10G, the right portion of the figures illustrates an image (e.g., 1018, 1026, 1046, 1076, or 1093) captured by device 1000 or a user interface (e.g., 1068) displayed by external device 1062.

In FIG. 10A, camera 1002 has forward-facing orientation 1002-1 (e.g., the orientation of pose 706), camera 1004 has forward-facing orientation 1004-1 (e.g., the orientation of pose 704), and the head (e.g., head pose) of user 1010 has forward-facing-orientation 1006 (e.g., the orientation of forward-facing head pose 702). Forward-facing orientation 1006 corresponds to region of interest 1012 (e.g., 802). In FIG. 10A, because the respective orientations 1002-1 and 1004-1 of cameras 1002 and 1004 approximately match orientation 1006, without camera occlusion, image 1018 that is collectively captured by cameras 1002 and 1004 would depict a relatively large amount of region of interest 1012.

In FIG. 10A, the 3D scene includes object 1014 that is in front of user 1010 and that is in region of interest 1012. In FIG. 10A, device 1000 receives natural language request 1016 "how much does this cost?" spoken by user 1010 because user 1010 wants to know how much object 1014 costs. Cameras 1002 and 1004 capture image 1018 associated with request 1016. For example, camera 1002 captures a first respective image and camera 1004 concurrently captures a second respective image and device 1000 constructs image 1018 based on combining the first and second respective images. The first and second respective images are captured concurrently with receiving request 1016 and/or in response to receiving request 1016.

Image 1018 includes a relatively small occlusion region 1020 that represents the portion of the 3D scene that is occluded in image 1018 (e.g., due to camera 1002 and/or 1004 being occluded by user 1010's face, user 1010's hair, user 1010's clothes, smudges on camera 1002 and/or 1004, etc.). Image 1018 further includes region 1022 (inside of the dashed lines) that corresponds to a portion of region of interest 1012 (e.g., corresponds to overlap region 908 or 918). In FIGS. 10A-10G, the dashed lines in the images (e.g., 1018, 1026, 1046, 1076, or 1093) are for illustrative purposes only and are not included in the respective images. Due to the relatively small amount of occlusion and because region 1022 corresponds to a large amount of region of interest 1012, image 1018 includes a relatively complete depiction of object 1014 that the user is asking about.

In FIG. 10A, because image 1018 has a relatively small amount of occlusion and because image 1018 corresponds to a large portion of region of interest 1012, in response to receiving user request 1016, device 1000 determines a high visibility metric for region of interest 1012 (e.g., according to the techniques described above with respect to FIGS. 9A-9B). Because the visibility metric is high (e.g., above a threshold), device 1000 attempts to perform a task to satisfy request 1016 and device 1000 provides audio output 1024. Specifically, a digital assistant (e.g., provided by DA unit 350) processes request 1016 in conjunction with image 1018 to determine how much object 1014 costs and device 1000 provides audio output 1024 "this costs $100."

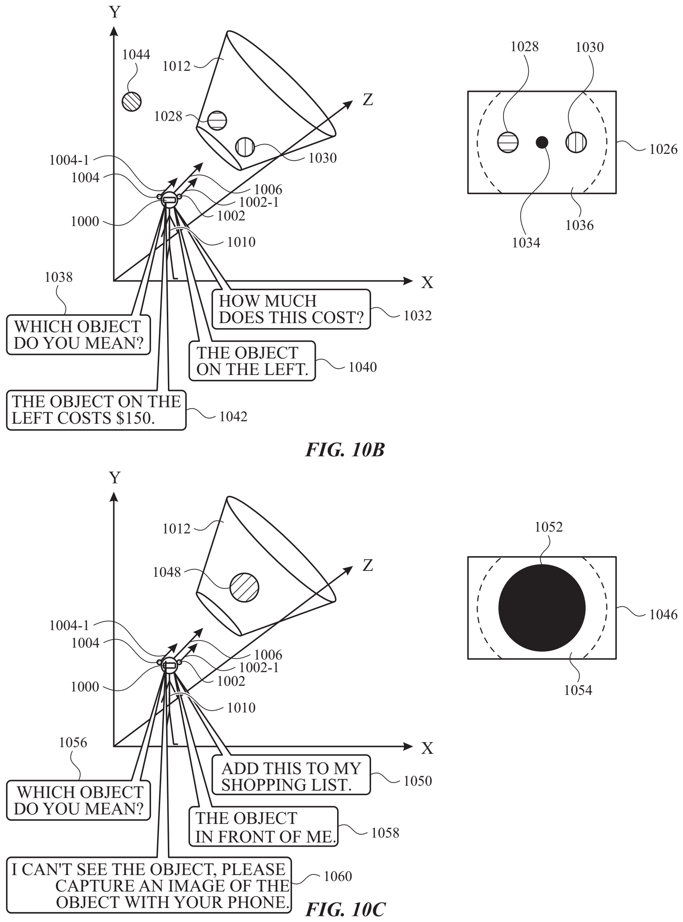

In FIG. 10B, like FIG. 10A, camera 1002 has forward-facing orientation 1002-1 (e.g., the orientation of pose 706), camera 1004 has forward-facing orientation 1004-1 (e.g., the orientation of pose 704), and the head (e.g., head pose) of user 1010 has forward-facing-orientation 1006 (e.g., the orientation of forward-facing head pose 702). Forward-facing orientation 1006 corresponds to region of interest 1012 (e.g., 802). In FIG. 10B, because respective orientations 1002-1 and 1004-1 of cameras 1002 and 1004 approximately match orientation 1006, without camera occlusion, image 1026 that is collectively captured by cameras 1002 and 1004 would depict a relatively large amount of region of interest 1012.

In FIG. 10B, the 3D scene includes objects 1028 and 1030 that are in front of user 1010 and that are in region of interest 1012. In FIG. 10B, device 1000 receives natural language request 1032 "how much does this cost?" spoken by user 1010 because user 1010 wants to know how much object 1028 costs. Cameras 1002 and 1004 capture image 1026 associated with request 1032, e.g., analogously to how cameras 1002 and 1004 capture image 1018 in FIG. 10A.

Image 1026 includes a relatively small occlusion region 1034 that represents the portion of the 3D scene that is occluded in image 1026. Image 1026 further includes region 1036 (inside of the dashed lines) that corresponds to a portion of region of interest 1012 (e.g., that corresponds to overlap region 908 or 918). Due to the relatively small amount of occlusion and because region 1036 corresponds to a large amount of region of interest 1012, image 1026 includes a relatively complete depiction of objects 1028 and 1030 that are of potential user interest.

In FIG. 10B, because image 1026 has a small amount of occlusion and because image 1026 corresponds to a large amount of region of interest 1012, in response to receiving request 1032, device 1000 determines a high visibility metric for region of interest 1012 (e.g., according to the techniques described above with respect to FIGS. 9A-9B). Because the visibility metric is high (e.g., above a threshold), device 1000 attempts to perform a task to satisfy request 1032. Specifically, a digital assistant processes image 1026 in conjunction with request 1032 "how much does this cost?" to attempt to determine an answer to request 1032. The digital assistant determines that image 1026 includes multiple objects 1028 and 1030 (e.g., that there are multiple objects detected within region of interest 1012). Device 1000 thus provides audio output 1038 "which object do you mean?" that requests user 1010 to disambiguate among objects 1028 and 1030. After device 1010 provides audio output 1038, device 1010 receives response 1040 "the object on the left" that is spoken by user 1010 and that disambiguates between objects 1028 and 1030. In response to receiving response 1040, the digital assistant processes request 1032, response 1040, and image 1026 in conjunction to determine that object 1028 costs $150 and device 1000 provides audio output 1042 "the object on the left costs $150."

In some examples, before device 1000 receives request 1032, device 1000 captures one or more images of the 3D scene and device 1000 detects object 1044 based on the captured image(s). In some examples, in response to receiving request 1032, device 1000 provides one or more audio outputs based on detected object 1044. For example, the one or more audio outputs refer to the respective positions of objects 1028 and/or 1030 relative to the position of detected object 1044, e.g., respective positions determined based on detection of objects 1028, 1030, and 1044, the head pose of user 1010, and a map of the 3D scene. As a specific example, if object 1044 is a green ball, audio output 1038 is instead "do you mean the object closer to the green ball or the object farther from the green ball?" and/or audio output 1042 is instead "the object closer to the green ball costs $150." In this manner, device 1000 uses the position and/or identity of a previously detected object when providing audio outputs, which may help user 1010 provide improved responses to device 1000 (e.g., that device 1000 can more accurately interpret) and may help device 1000 provide improved (e.g., more informative and/or unambiguous) audio outputs to user 1010.

In FIG. 10C, like FIG. 10B, camera 1002 has forward-facing orientation 1002-1 (e.g., the orientation of pose 706), camera 1004 has forward-facing orientation 1004-1 (e.g., the orientation of pose 704), and the head (e.g., head pose) of user 1010 has forward-facing-orientation 1006 (e.g., the orientation of forward-facing head pose 702). Forward-facing orientation 1006 corresponds to region of interest 1012 (e.g., 802). In FIG. 10C, because respective orientations 1002-1 and 1004-1 of cameras 1002 and 1004 approximately match orientation 1006, without camera occlusion, image 1046 that is collectively captured by cameras 1002 and 1004 would depict a relatively large amount of region of interest 1012.

In FIG. 10C, the 3D scene includes object 1048 that is in front of user 1010 and that is in region of interest 1012. In FIG. 10C, device 1000 receives natural language request 1050 "add this to my shopping list" spoken by user 1010 because user 1010 wants to add object 1048 to their shopping list. Cameras 1002 and 1004 capture image 1046 associated with request 1050, e.g., analogously to how cameras 1002 and 1004 capture image 1018 in FIG. 10A.

Image 1046 includes a relatively large occlusion region 1052 that represents the portion of the 3D scene that is occluded in image 1046. In FIG. 10C, image 1046 includes occlusion region 1052 due to occlusion of cameras 1002 and/or 1004 by user 1010's face, user 1010's hair, and/or user 1010's clothes. Image 1046 further includes region 1054 (inside of the dashed lines) that corresponds to a portion of region of interest 1012 (e.g., that corresponds to overlap region 908 or 918). Even though image 1046 corresponds to a large portion of region of interest 1012, due to the large amount of occlusion, image 1046 does not depict object 1048 that user 1010 asks about.

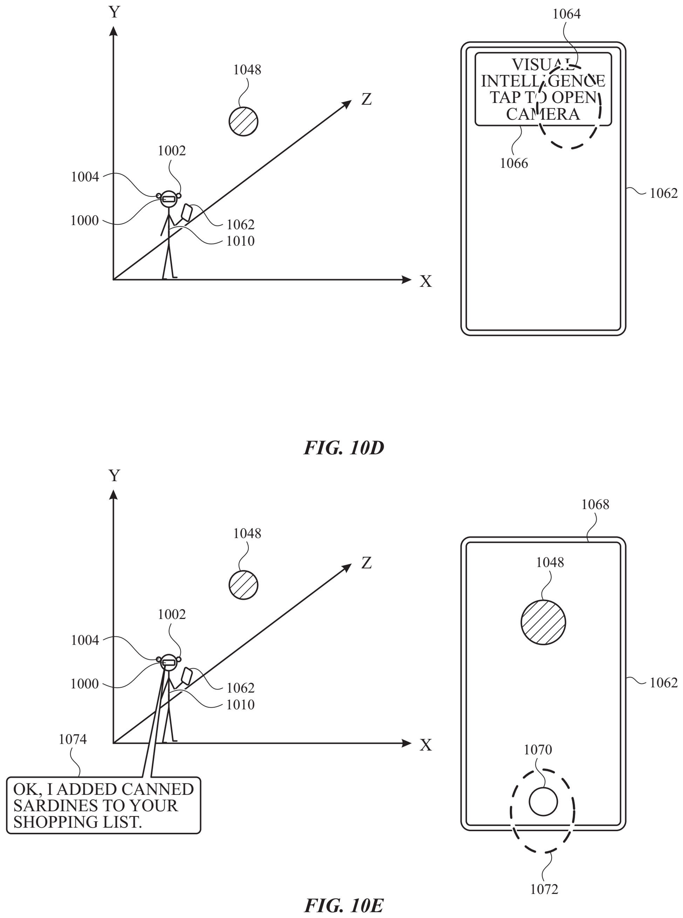

In FIG. 10C, even though image 1046 corresponds to a large portion of region of interest 1012, due to the large amount of occlusion, in response to receiving request 1050, device 1000 determines a low visibility metric for region of interest 1012 (e.g., according to the techniques described above with respect to FIGS. 9A-9B). Because the visibility metric is low (e.g., below a threshold), device 1000 provides audio output 1056 "which object do you mean?" that requests user 1010 to specify object 1048 that corresponds to request 1050 (e.g., to specify which object user 1010 is referring to). After device 1000 provides audio output 1056, device 1000 receives response 1058 "the object in front of me" spoken by user 1010. In response to receiving response 1058, the digital assistant processes response 1058 and image 1046 to determine whether image 1046 depicts object 1048. For example, based on the head pose of user 1010, orientations 1002-1 and 1004-1 of cameras 1002 and 1004, and image 1048, the digital assistant determines whether an object that is in front of user 1010 can be detected (e.g., identified) from image 1048 with sufficient confidence. In FIG. 10C, the digital assistant determines that image 1046 does not depict object 1048 (due to image occlusion) and device 1000 thus provides audio output 1060 "I can't see the object, please capture an image of the object with your phone" that requests user 1010 to capture an image of object 1048 using external device 1062 (FIGS. 10D-10E).

In FIG. 10D, after device 1000 provides audio output 1060, user 1010 holds external device 1062 to capture an image of desired object 1048. External device 1062 implements at least some of the components of computer system 101 and external device 1062 includes one or more cameras. While FIGS. 10D-10E illustrate that external device 1062 is a smartphone, in other examples, external device 1062 is another type of device, e.g., a laptop computer, a tablet device, or a smart watch.

In FIG. 10D, after (or concurrently with) providing audio output 1060, external device 1062 displays camera icon 1066 that prompts user 1010 to activate one or more cameras of external device 1010. In FIG. 10D, external device 1062 receives user input 1064 (e.g., touch input, speech input, gesture input, movement input, gaze input, and/or input received via a peripheral device) that selects camera icon 1066.

In FIG. 10E, in response to receiving user input 1066, external device 1062 displays camera user interface 1068. Camera user interface 1068 includes a live view of the 3D scene that is captured by the one or more cameras of external device 1062 and includes shutter button 1070 that is selectable to capture an image. The live view depicts object 1048 because user 1010 has pointed one or more cameras of external device 1062 at object 1048 to capture an image of object 1048. In FIG. 10E, external device 1062 receives user input 1072 (e.g., touch input, speech input, gesture input, movement input, gaze input, and/or input received via a peripheral device) that selects shutter button 1070. In response to receiving user input 1072, external device 1062 captures an image of object 1048. The digital assistant then processes the image of object 1048 in conjunction with request 1050 "add this to my shopping list" to perform the requested task of adding object 1048 (e.g., a can of sardines) to user 1010's shopping list and device 1000 provides audio output 1074 "ok, I added canned sardines to your shopping list." In this manner, when initial image 1046 does not provide sufficient information for device 1000 to satisfy user request 1050 (e.g., due to image occlusion and/or the respective orientations 1002-1 and/or 1004-2 of cameras 1002 and/or 1004), device 1000 and external device 1062 can satisfy user request 1050 without requiring user 1010 to repeat user request 1050.

While the example of FIGS. 10D-10E illustrate that external device 1062 displays camera user interface 1068 in response to receiving user input 1064 that selects camera icon 1066, in other examples, external device 1062 displays camera user interface 1068 in response to another triggering event. For example, external device 1062 automatically, without user input, displays camera user interface 1068 concurrently with device 1000 providing audio output 1060, external device 1062 automatically, without user input, displays camera user interface 1068 after device 1000 provides audio output 1060 (e.g., so FIG. 10C proceeds directly to FIG. 10E), external device 1062 displays camera user interface after device 1000 provides audio output 1060 and in response to detection of motion input that corresponds to a raising motion of external device 1062 (e.g., motion associated with removing external device 1062 from user 1010's pocket or bag), or external device 1062 displays camera user interface 1068 after device 1000 provides audio output 1060 and in response to a user selection of an icon for launching a camera application.

In some examples, if device 1000 determines that the visibility metric does not satisfy a condition (e.g., is below a threshold), device 1000 provides audio output 1060 that requests user 1010 to capture an image of object 1048 using external device 1062 without providing audio output 1056 that asks user 1010 to specify object 1048 (e.g., to specify which object user 1010 is referring to) (and/or without determining whether image 1046 depicts object 1048). After device 1000 provides audio output 1060 (or concurrently with device 1000 providing audio output 1060) external device 1062 displays camera user interface 1068 according to the techniques discussed above. Thus, in some examples, if device 1000 determines a low visibility metric in response to receiving a user request, device 1000 directly prompts the user to capture an image of the relevant object, without asking user 1010 to specify the relevant object.

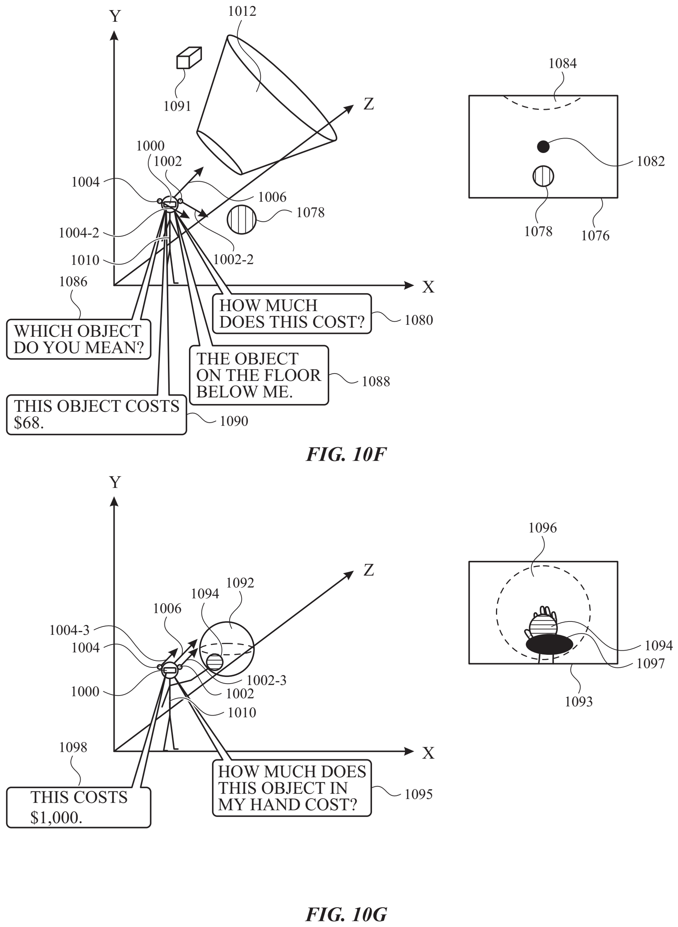

In FIG. 10F, camera 1002 has downwards-facing orientation 1002-2 (e.g., the orientation of pose 706), camera 1004 has downwards-facing orientation 1004-2 (e.g., the orientation of pose 704), and the head (e.g., head pose) of user 1010 has forward-facing-orientation 1006 (e.g., the orientation of forward-facing head pose 702). Forward-facing orientation 1006 corresponds to region of interest 1012 (e.g., 802). In FIG. 10F, because respective orientations 1002-2 and 1004-2 of cameras 1002 and 1004 do not match orientation 1006, image 1076 that is collectively captured by cameras 1002 and 1004 depicts a relatively small amount of region of interest 1012 (or does not depict any of region of interest 1012).

In FIG. 10F, the 3D scene includes object 1078 that is downwards relative to user 1010 (e.g., is on the floor) and that is not in region of interest 1012. In FIG. 10F, device 1000 receives natural language request 1080 "how much does this cost?" spoken by user 1010 because user 1010 wants to know how much object 1078 costs. FIG. 10F illustrates an example where user 1010 requests to perform a task based on object 1078 that is not in region of interest 1012. Specifically, while user 1010 looks forward, the user issues request 1080 that asks about object 1078 that is on the floor (e.g., on the x-z plane) (e.g., user 1010's head faces forward but the user is gazing downward to ask a question about object 1078 that is on the floor).

In FIG. 10F, cameras 1002 and 1004 capture image 1076 associated with request 1080, e.g., analogously to how cameras 1002 and 1004 capture image 1018 in FIG. 10A. Image 1076 includes a relatively small occlusion region 1082 that represents the portion of the 3D scene that is occluded in image 1076. Image 1076 further includes region 1084 (inside of the dashed lines) that corresponds to a portion of region of interest 1012 (e.g., that corresponds to overlap region 908 or 918). Region 1084 is relatively small because of the mismatch between orientations 1002-2 and 1006 and between orientations 1004-2 and 1006. For example, because cameras 1002 and 1004 are facing downwards relative to user 1010, only a top portion of image 1076 depicts region of interest 1012 that faces forwards relative to user 1010. Image 1076 depicts object 1078 that user 1010 is asking about.

In FIG. 10F, even though image 1076 includes a small amount of occlusion, because image 1076 depicts a small portion of region of interest 1012, in response to receiving request 1080, device 1000 determines a low visibility metric for region of interest 1012 (e.g., according to the techniques described above with respect to FIGS. 9A-9B). Because the visibility metric is low (e.g., below a threshold), device 1000 provides audio output 1086 "which object do you mean?" that requests user 1010 to specify object 1078 that corresponds to request 1080 (e.g., to specify which object user 1010 is referring to). After device 1000 provides audio output 1086, device 1000 receives response 1088 "the object on the floor below me" spoken by user 1010. In response to receiving response 1088, the digital assistant processes response 1088 and image 1076 to determine whether image 1076 depicts object 1078. For example, based on the head pose of user 1010, orientations 1002-2 and 1004-2 of cameras 1002 and 1004, and image 1048, the digital assistant determines whether an object that is on the floor below user 1010 can be detected (e.g., identified) from image 1076 with sufficient confidence. In FIG. 10F, the digital assistant determines that image 1076 depicts object 1078 (e.g., with a sufficient amount of confidence). Because image 1076 depicts object 1078, the digital assistant processes image 1076 in conjunction with request 1080 "how much does this cost" to search for the cost of object 1078 and device 1000 provides audio output 1090 "this object costs $68".

In some examples, if device 1000 determines the visibility metric does not satisfy a condition (e.g., is below a threshold), device 1000 provides an audio output (e.g., 1060 in FIG. 10C) that requests user 1010 to capture an image of object 1078 using external device 1062 without providing audio output 1086 that asks user 1010 to specify object 1078 (and/or without determining whether image 1076 depicts object 1078). In some examples, user 1010 then uses external device 1062 to capture an image of object 1078 for device 1000 to provide audio output 1090 that satisfies request 1080, e.g., analogous to that described with respect to FIGS. 10D-10E. Thus, in some examples, in contrast to that of FIG. 10F, if the visibility metric does not satisfy the condition, device 1000 prompts user 1010 to use external device 1062 to capture an image of relevant object 1078, even though initial image 1076 may already depict relevant object 1078.

In some examples, before device 1000 receives request 1080, device 1000 captures one or more images of the 3D scene and device 1000 detects object 1091 based on the captured image(s). In some examples, in response to receiving request 1080, device 1000 provides one or more audio outputs based on detected object 1091. For example, the one or more audio outputs refer to the position of object 1078 relative to the position of detected object 1091. As a specific example, if object 1091 is a red ball, audio output 1086 is instead "do you mean the object below the red ball?" and/or audio output 1090 is instead "the object below the red ball costs $68", e.g., similar to how device 1000 uses the position of previously detected object 1044 in FIG. 10B.

In FIG. 10G, camera 1002 has forward-facing orientation 1002-3 (e.g., the orientation of pose 704), camera 1004 has forward-facing orientation 1004-3 (e.g., the orientation of pose 706), and the head (e.g., head pose) of user 1010 has forward-facing-orientation 1006 (e.g., the orientation of forward-facing head pose 702). Forward-facing orientation 1006 corresponds to region of interest 1092 (e.g., 808). In FIG. 10G, because respective orientations 1002-3 and 1004-3 of cameras 1002 and 1004 approximately match orientation 1006, without camera occlusion, image 1093 that is collectively captured by cameras 1002 and 1004 would depict a relatively large amount of region of interest 1092.

In FIG. 10G, the 3D scene includes object 1094 that is held in the hand of user 1010 and that is in region of interest 1092 (e.g., a region of interest for handheld objects, as described above with respect to FIG. 8B). In FIG. 10G, device 1000 receives natural language request 1095 "how much does this object in my hand cost?" spoken by user 1010 because user 1010 wants to know how much object 1094 (that is held in user 1010's hand) costs.

In FIG. 10G, cameras 1002 and 1004 capture image 1093 associated with request 1095, e.g., analogously to how cameras 1002 and 1004 capture image 1018 in FIG. 10A. Image 1093 includes a relatively small occlusion region 1097 that represents the portion of the 3D scene that is occluded in image 1093. Image 1093 further includes region 1096 (inside of the dashed lines) that corresponds to region of interest 1092. Due to the relatively small amount of occlusion and because region 1096 corresponds a large amount of region of interest 1092 (e.g., to all of region of interest 1092, if region 1096 were not occluded), image 1093 includes a relatively complete depiction of object 1094 in user 1010's hand.

In FIG. 10G, device 1000 determines that request 1095 corresponds to an object that is held in user 1010's hand. Because request 1095 corresponds to an object that is held in user 1010's hand, device 1000 determines a visibility metric for region of interest 1092 (e.g., a region of interest for handheld objects) (e.g., region of interest 808, as described with respect to FIG. 8B). In contrast, in FIGS. 10A-10F, device 1000 did not determine that the respective user requests (e.g., 1016, 1032, 1050, and 1080) correspond to an object that is held in user 1010's hand, so device 1000 instead determines a visibility metric for different region of interest 1012 (e.g., region of interest 802, as described with respect to FIG. 8A).

In FIG. 10G, because image 1093 has a relatively small amount of occlusion and because image 1093 corresponds to a large portion of region of interest 1092, in response to receiving user request 1095, device 1000 determines a high visibility metric for region of interest 1092 (e.g., according to the techniques described above with respect to FIGS. 9A-9B). Because the visibility metric is high (e.g., above a threshold), device 1000 attempts to perform a task to satisfy request 1095 and device 1000 provides audio output 1098. Specifically, a digital assistant processes request 1095 in conjunction with image 1093 to determine how much object 1094 costs and device 1000 provides audio output 1098 "this costs $1,000."

Additional descriptions regarding FIGS. 7, 8A-8B, 9A-9B, and 10A-10G are provided below in reference to method 1100 described below with respect to FIG. 11.

FIG. 11 is a flow diagram of method 1100 for providing audio outputs in response to a natural language input, according to some examples. In some examples, method 1100 is performed at a computer system (e.g., device 1000) that is in communication with one or more visual imaging sensors (e.g., cameras, e.g., RGB cameras, infrared cameras, and/or depth cameras) and one or more audio output devices (e.g., speakers). In some examples, method 1100 is governed by instructions that are stored in a non-transitory (or transitory) computer-readable storage medium and that are executed by one or more processors of a computer system, such as the one or more processing unit(s) 302 of computer system 101 (e.g., controller 110 in FIG. 1). In some examples, the operations of method 1100 are distributed across multiple computer systems, e.g., a computer system and a separate server system. Some operations in method 1100 are, optionally, combined, the orders of some operations are, optionally, changed, and some operations are, optionally, omitted.

Method 1100 includes while a head of a user (e.g., 1010) of the computer system has a head pose (e.g., 702) that corresponds to a forward-facing region of a three-dimensional (3D) scene (e.g., 802, 808, 906, 916, 1012, or 1092) (e.g., forward-facing relative to the head pose) (e.g., a forward-facing region determined by region tracking unit 380), receiving (1102) a natural language input (e.g., 1016, 1032, 1050, 1080, or 1095) that corresponds to a first object (e.g., 1014, 1028, 1048, 1078, or 1094) within the 3D scene.

Method 1100 includes capturing (1104), via the one or more visual imaging sensors, image data (e.g., 1018, 1026, 1046, 1076, or 1093) associated with the natural language input that corresponds to the first object within the 3D scene.

Method 1100 includes in response to (1106) receiving the natural language input that corresponds to the first object within the 3D scene: in accordance with a determination that a visibility metric (e.g., determined by visibility analysis unit 390) that represents an amount of the forward-facing region of the 3D scene depicted by the image data satisfies a condition (e.g., is greater than a threshold), providing (1108), via the one or more audio output devices, a first audio output (e.g., 1024, 1038, or 1098) that corresponds to the first object; and in accordance with a determination that the visibility metric that represents the amount of the forward-facing region of the 3D scene depicted by the image data does not satisfy the condition (e.g., is less than the threshold), providing (1110), via the one or more audio output devices, a second audio output (e.g., 1056 or 1086) (e.g., different from the first audio output) that corresponds to the first object

In some examples, in accordance with a determination that the head pose is a first head pose, the forward-facing region of the 3D scene is a first region of the 3D scene; and in accordance with a determination that the head pose is a second head pose that is different from the first head pose, the forward-facing region of the 3D scene is a second region of the 3D scene that is different from the first region of the 3D scene.

In some examples, capturing, via the one or more visual imaging sensors, the image data associated with the natural language input includes: while receiving the natural language input, capturing, via the one or more visual imaging sensors, the image data associated with the natural language input.

In some examples, capturing, via the one or more visual imaging sensors, the image data associated with the natural language input includes: in response to receiving the natural language input, capturing, via the one or more visual imaging sensors, the image data associated with the natural language input.

In some examples, the first audio output (e.g., 1024 or 1098) that corresponds to the first object indicates a result (e.g., a result that satisfies a user request included in the natural language input) of a first task that is performed (e.g., by a digital assistant) based on the natural language input and the first object.

In some examples, providing, via the one or more audio output devices, the first audio output that corresponds to the first object includes: in accordance with a determination that the forward-facing region of the 3D scene includes a plurality of detected objects (e.g., 1028 and 1030), wherein the plurality of detected objects includes the first object (e.g., 1028), providing an audio output (e.g., 1038) that requests for the user to disambiguate among the plurality of detected objects.

In some examples, the second audio output (e.g., 1056) that corresponds to the first object (e.g., 1048) includes a request for the user to specify the first object (e.g., to specify an attribute (e.g., identity, shape, size, color, orientation, and location) of the first object). In some examples, the second audio output corresponds to a request (e.g., 1060) for the user to use an external device (e.g., 1062) to capture an image of the first object. In some examples, after the external device captures an image of the first object, the computer system provides, via the one or more audio output devices, an audio output (e.g., 1074) that indicates a task that is performed based on the natural language input and the captured image of the first object. In some examples, the computer system provides the audio output without receiving any further natural language input after receiving the natural language input, so the user does not have to repeat their initial natural language request for the requested task related to the object to be performed and for the results of the requested task to be output via the one or more audio output devices.

In some examples, the computer system includes a first device (e.g., 1002) and a second device (e.g., 1004), wherein the first device is different from the second device; the natural language input is received while the first device is worn by the user and while the second device is worn by the user; and the forward-facing region of the 3D scene is determined based on a position of the first device while the first device is worn by the user, an orientation of the first device (e.g., 1002-1, 1002-2, or 1002-3) while the first device is worn by the user, a position of the second device while the second device is worn by the user, and an orientation of the second device (e.g., 1004-1, 1004-2, or 1004-3) while the second device is worn by the user.

In some examples, the one or more visual imaging sensors include a first visual imaging sensor (e.g., 1002) and a second visual imaging sensor (e.g., 1004) different from the first visual imaging sensor; and capturing, via the one or more visual imaging sensors, the image data (e.g., 1018, 1026, 1046, 1076, or 1093) associated with the natural language input includes: capturing, via the first visual imaging sensor, first image data; and capturing, via the second visual imaging sensor, second image data that is different from the first image data (e.g., concurrently capturing the first image data and the second image data).

In some examples, the first image data is captured while the first visual imaging sensor is worn (e.g., while a device that includes the first visual imaging sensor is worn (e.g., while the device is inserted into an ear)) on a first side (e.g., a left side or a right side) of the head of the user; and the second image data is captured while the second visual imaging sensor is worn (e.g., while a device that includes the second visual imaging sensor is worn (e.g., while the device is inserted into an ear)) on a second side (e.g., a left side or a right side) of the head of the user, wherein the first side of the head of the user is opposite to the second side of the head of the user.

In some examples, in accordance with a determination that the first image data is captured while the first visual imaging sensor has a first orientation (e.g., relative to a device that includes the first visual imaging sensor and/or relative to the head of the user) (e.g., 1002-1 in FIG. 10A) and a determination that the second image data is captured while the second visual imaging sensor has a second orientation (e.g., relative to a device that includes the second visual imaging sensor and/or relative to the head of the user) (e.g., 1004-1 in FIG. 10A), the visibility metric that represents the amount of the forward-facing region of the 3D scene (e.g., 1012) depicted by the image data (e.g., 1018) has a first value (e.g., as described with respect to FIG. 10A); and in accordance with a determination that the first image data is captured while the first visual imaging sensor has a third orientation (e.g., relative to a device that includes the first visual imaging sensor and/or relative to the head of the user) (e.g., 1002-2 in FIG. 10F) different from the first orientation and a determination that the second image data is captured while the second visual imaging sensor has a fourth orientation (e.g., relative to a device that includes the second visual imaging sensor and/or relative to the head of the user) (e.g., 1004-2 in FIG. 10F) different from the second orientation, the visibility metric that represents the amount of the forward-facing region of the 3D scene (e.g., 1012) depicted by the image data (e.g., 1076) has a second value different from the first value (e.g., as described with respect to FIG. 10F) (e.g., the visibility metric depends on the respective orientation of the first visual imaging sensor when the first image data is captured and on the respective orientation of the second visual imaging sensor when the second image data is captured).

In some examples, in accordance with a determination that the first image data and the second image data depict (e.g., collectively depict) a first amount of the forward-facing region of the 3D scene (e.g., 1012), the visibility metric has a first value (e.g., as described with respect to FIG. 10F); and in accordance with a determination that the first image data and the second image data depict (e.g., collectively depict) a second amount of the forward-facing region of the 3D scene that is greater than the first amount of the forward-facing region of the 3D scene, the visibility metric has a second value that is greater than the first value (e.g., as described with respect to FIG. 10A).

In some examples, the image data includes an image region (e.g., pixels) that represents occlusion of the forward-facing region of the 3D scene (e.g., 904, 914, 1020, 1034, 1052, 1082, or 1097), and wherein the visibility metric that represents the amount of the forward-facing region of the 3D scene depicted by the image data is based on the image region that represents occlusion of the forward-facing region of the 3D scene.

In some examples, in accordance with a determination that the image region (e.g., 1020) that represents occlusion of the forward-facing region of the 3D scene has a first size, the visibility metric that represents the amount of the forward-facing region of the 3D scene depicted by the image data has a third value (e.g., as described with respect to FIG. 10A); and in accordance with a determination that the image region (e.g., 1052) that represents occlusion of the forward-facing region of the 3D scene has a second size that is greater than the first size, the visibility metric that represents the amount of the forward-facing region of the 3D scene depicted by the image data has a fourth value that is less than the third value (e.g., as described with respect to FIG. 10C).

In some examples, the visibility metric that represents the amount of the forward-facing region of the 3D scene (e.g., 802, 808, 906, 916, 1012, or 1092) depicted by the image data is based on an amount of overlap (e.g., as represented by visibility region 910 or 920) between a non-occluded region of the 3D scene that is depicted by the image data and the forward-facing region of the 3D scene (e.g., such that a greater amount of overlap results in a higher visibility metric and a lesser amount of overlap results in a lesser visibility metric).

In some examples, the forward-facing region of the 3D scene has predefined (e.g., fixed) dimensions (e.g., length, width, depth, area, and/or volume) (e.g., dimensions that do not depend on the head pose of the user) (e.g., dimensions that are determined before the natural language input is received and before the image data is captured).

In some examples, the forward-facing region of the 3D scene is at least a predefined (e.g., fixed) distance (e.g., 804) away from the head of the user (e.g., such that the portion of the forward-facing region of the 3D scene that is closest to the head of the user is at least a predefined non-zero distance away from the head of the user).

In some examples, a handheld object region is determined; the handheld object region is where a respective user holds a respective object in their hand while the respective user issues a query about the respective object; and the forward-facing region of the 3D scene (e.g., 808 or 1092) is determined based on the handheld object region.

In some examples, in accordance with a determination that the natural language input that corresponds to the first object is a first type of natural language input (e.g., 1016, 1032, 1050, or 1080), the forward-facing region of the 3D scene is a third region of the 3D scene (e.g., 802 or 1012); and in accordance with a determination that the natural language input (e.g., 1095) that corresponds to the first object is a second type of natural language input that is different from the first type of natural language input, the forward-facing region of the 3D scene is a fourth region of the 3D scene (e.g., 808 or 1092) that is different from the third region of the 3D scene

In some examples, method 1100 further includes: after providing, via the one or more audio output devices, the second audio output (e.g., 1056 or 1086) that corresponds to the first object: receiving a user input (e.g., 1058 or 1088) that corresponds to the first object (e.g., a speech input, a gaze input, and/or a gesture input) (e.g., a user input that is responsive to the second audio output and that identifies the first object and/or identifies a location of the first object); and in response to receiving the user input that corresponds to the first object: in accordance with a determination, based on the user input (e.g., 1088) that corresponds to the first object, that the image data (e.g., 1076) satisfies a predetermined condition with respect to the first object (e.g., 1078) (e.g., that the image data is determined to depict the first object with at least a threshold amount of confidence), providing, via the one or more audio output devices, a third audio output (e.g., 1090) that indicates a result of a second task that is performed (e.g., by a digital assistant) based on the natural language input and the first object; and in accordance with a determination, based on the user input (e.g., 1058) that corresponds to the first object, that the image data (e.g., 1046) does not satisfy the predetermined condition with respect to the first object (e.g., 1048) (e.g., that the image data is not determined to depict the first object with at least a threshold amount of confidence), providing, via the one or more audio output devices, a fourth audio output (e.g., 1060) that requests the user to use an external device (e.g., 1062) (e.g., to use the external device to capture an image of the first object).

In some examples, after providing, via the one or more audio output devices, the fourth audio output that requests the user to use the external device, the external device displays a camera user interface (e.g., 1068) and the external device captures an image of the first object (e.g., 1048) while displaying the camera user interface. In some examples, method 1100 includes: after the external device captures the image of the first object while displaying the camera user interface (e.g., in response to receiving user input 1072), providing, via the one or more audio output devices, a fifth audio output (e.g., 1074) that indicates a result of a third task that is performed (e.g., by a digital assistant) based on the image of the first object and the natural language input (e.g., 1050).

In some examples, the external device displays the camera user interface in response to a selection (e.g., 1064) of a user interface element (e.g., 1066) displayed by the external device.

In some examples, method 1100 includes: before receiving the natural language input (e.g., 1032 or 1080), capturing, via the one or more visual imaging sensors, third image data that represents the 3D scene, wherein: the first audio output is based on a second object (e.g., 1044) that is detected based on the third image data that represents the 3D scene (e.g., as described with respect to FIG. 10B); and/or the second audio output is based on the second object (e.g., 1091) that is detected based on the third image data that represents the 3D scene (e.g., as described with respect to FIG. 10F).

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

As described above, one aspect of the present technology is the gathering and use of data available from various sources to facilitate user interactions with a three-dimensional scene. The present disclosure contemplates that in some instances, this gathered data may include personal information data that uniquely identifies or can be used to contact or locate a specific person. Such personal information data can include demographic data, location-based data, telephone numbers, email addresses, twitter IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to output spoken responses to assist a user. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of outputting spoken responses for the user, the present technology can be configured to allow users to select to "opt in" or "opt out" of participation in the collection of personal information data during registration for services or anytime thereafter. In another example, users can select not to provide personal information data based on which on spoken responses are generated. In yet another example, users can select to limit the length of time for which such data is maintained. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, spoken responses can be generated based on non-personal information data or a bare minimum amount of personal information, such as the content being requested by the device associated with a user, other non-personal information available to the service, or publicly available information.

### Further Embodiments:

1. A method, comprising:
   at a first computer system in communication with one or more image sensors:
   obtaining, using the one or more image sensors, a first image;
   receiving a user request related to the first image; and
   in response to obtaining the first image and receiving the user request:
      in accordance with a determination that a quality of the first image does not satisfy a quality criterion, causing a second computer system to provide a prompt to capture a second image with the second computer system; and
      in accordance with a determination that the quality of the first image satisfies the quality criterion:
         generating a response to the user request based on the first image; and
         providing an output including the response to the user request based on the first image.
2. The method of embodiment 1, wherein the first computer system is a head mounted electronic device and the second computer system is a smart phone.
3. The method of any one of embodiments 1-2, wherein an image sensor of the first computer system has a quality metric that is less than a quality metric of an image sensor of the second computer system.
4. The method of any one of embodiments 1-3, further comprising:
   in response to detecting the first image and receiving the user request:
   in accordance with a determination that the user request includes a request of a first type, selecting a first quality criterion as the quality criterion; and
   in accordance with a determination that the user request includes a request of a second type different from the first type, selecting a second quality criterion different from the first quality criterion as the quality criterion.
5. The method of any one of embodiments 1-4, further comprising:
   after causing a second computer system to provide a prompt to capture a second image with the second computer system:
   detecting a user input to capture the second image with the second computer system;
   generating a response to the user request based on the second image; and
   providing an output including the response to the user request based on the second image.
6. The method of any one of embodiments 1-5, wherein the determination of whether the quality of the first image satisfies the quality criterion comprises:
   providing a prompt to a large language model (LLM), wherein the prompt includes a request of whether the first image is of sufficient quality to complete a task determined from the user request.
7. The method of any one of embodiments 1-5, wherein the determination of whether the quality of the first image satisfies the quality criterion comprises:
   generating an embedding of the first image; and
   comparing the embedding of the first image to a learned set of embeddings representing a high-quality image or a low-quality image.
8. The method of embodiment 7, further comprising:
   in accordance with a determination that the user request is a request of a first type, selecting a first learned set of embeddings as the learned set of embeddings; and
   in accordance with a determination that the user request is a request of a second type, selecting a second learned set of embeddings as the learned set of embeddings.
9. The method of any one of embodiments 1-8, further comprising:
   in response to detecting the first image and receiving the user request:
   in accordance with a determination that a context of the first computer system indicates that the first image does not satisfy the quality criterion:
   forgoing determining whether the first image satisfies the quality criterion; and
   causing the second computer system to provide the prompt to capture the second image with the second computer system.
10. The method of embodiment 9, wherein the determination that the context of the first computer system indicates that the first image does not satisfy the quality criterion includes a determination that the first computer system is moving.
11. The method of any one of embodiments 9-10, wherein the determination that the context of the first computer system indicates that the first image does not satisfy the quality criterion includes a determination that an illumination level of an environment of the first computer system is below an illumination threshold.
12. The method of any one of embodiments 9-11, wherein the determination that the context of the first computer system indicates that the first image does not satisfy the quality criterion includes a determination that the one or more image sensors are obscured.
13. The method of any one of embodiments 9-12, wherein the determination that the context of the first computer system indicates that the first image does not satisfy the quality criterion includes a determination that a field of view of the one or more image sensors includes text.
14. The method of any one of embodiments 1-13, further comprising:
   in accordance with a determination that a quality of the first image does not satisfy the quality criterion, causing a camera user interface to be displayed with a display generation component in communication with the second computer system.
15. The method of embodiment 14, further comprising:
   after causing the camera user interface to be displayed with the display generation component in communication with the second computer system:
   detecting a user input to capture the second image; and
   in response to detecting the user input to capture the second image, ceasing to display the camera user interface with the display generation component in communication with the second computer system.
16. The method of embodiment 14, wherein the camera user interface is displayed on a lock screen with the display generation component in communication with the second computer system.
17. The method of any one of embodiments 1-16, wherein the second computer system is not physically connected to the first computer system.
18. The method of any one of embodiments 1-16, wherein the second computer system is physically connected to the first computer system with a wire and wherein the second computer system and the first computer system are not located within a same housing.
19. A non-transitory computer-readable storage medium storing one or more programs configured to be executed by one or more processors of a first computer system in communication with one or more image sensors, the one or more programs including instructions for performing the method of any of embodiments 1-16.
20. A first computer system configured to communicate with one or more image sensors, the first computer system comprising:
   one or more processors; and
   one or more memories storing one or more programs configured to be executed by the one or more processors, the one or more programs including instructions for performing the method of any of embodiments 1-16.
21. A first computer system configured to communicate with one or more image sensors, the first computer system comprising:
   means for performing the method of any of embodiments 1-16.
22. A computer program product comprising one or more programs configured to be executed by one or more processors of a first computer system that is in communication with one or more image sensors, the one or more programs including instructions for performing the method of any of embodiments 1-16.
23. A non-transitory computer-readable storage medium storing one or more programs configured to be executed by one or more processors of a first computer system that is in communication with one or more image sensors, the one or more programs including instructions for:
   obtaining, using the one or more image sensors, a first image;
   receiving a user request related to the first image; and
   in response to obtaining the first image and receiving the user request:
      in accordance with a determination that a quality of the first image does not satisfy a quality criterion, causing a second computer system to provide a prompt to capture a second image with the second computer system; and
      in accordance with a determination that the quality of the first image satisfies the quality criterion:
         generating a response to the user request based on the first image; and
         providing an output including the response to the user request based on the first image.
24. A computer system configured to communicate with one or more image sensors, the one or more computer systems comprising:
   one or more processors; and
   one or more memories storing one or more programs configured to be executed by the one or more processors, the one or more programs including instructions for:
      obtaining, using the one or more image sensors, a first image;
      receiving a user request related to the first image; and
      in response to obtaining the first image and receiving the user request:
         in accordance with a determination that a quality of the first image does not satisfy a quality criterion, causing a second computer system to provide a prompt to capture a second image with the second computer system; and
         in accordance with a determination that the quality of the first image satisfies the quality criterion:
            generating a response to the user request based on the first image; and
            providing an output including the response to the user request based on the first image.
25. A computer system configured to communicate with one or more image sensors, the computer systems comprising:
   means for obtaining, using the one or more image sensors, a first image;
   means for receiving a user request related to the first image; and
   means, in response to obtaining the first image and receiving the user request, for:
      in accordance with a determination that a quality of the first image does not satisfy a quality criterion, causing a second computer system to provide a prompt to capture a second image with the second computer system; and
      in accordance with a determination that the quality of the first image satisfies the quality criterion:
         generating a response to the user request based on the first image; and
         providing an output including the response to the user request based on the first image.
26. A computer program product comprising one or more programs configured to be executed by one or more processors of a computer system that is in communication with one or more image sensors, the one or more programs including instructions for:
   obtaining, using the one or more image sensors, a first image;
   receiving a user request related to the first image; and
   in response to obtaining the first image and receiving the user request:
      in accordance with a determination that a quality of the first image does not satisfy a quality criterion, causing a second computer system to provide a prompt to capture a second image with the second computer system; and
      in accordance with a determination that the quality of the first image satisfies the quality criterion:
         generating a response to the user request based on the first image; and
         providing an output including the response to the user request based on the first image.
27. A method, comprising:
   at a computer system that is in communication with one or more visual imaging sensors and one or more audio output devices:
   while a head of a user of the computer system has a head pose that corresponds to a forward-facing region of a three-dimensional (3D) scene, receiving a natural language input that corresponds to a first object within the 3D scene;
   capturing, via the one or more visual imaging sensors, image data associated with the natural language input that corresponds to the first object within the 3D scene; and
   in response to receiving the natural language input that corresponds to the first object within the 3D scene:
      in accordance with a determination that a visibility metric that represents an amount of the forward-facing region of the 3D scene depicted by the image data satisfies a condition, providing, via the one or more audio output devices, a first audio output that corresponds to the first object; and
      in accordance with a determination that the visibility metric that represents the amount of the forward-facing region of the 3D scene depicted by the image data does not satisfy the condition, providing, via the one or more audio output devices, a second audio output that corresponds to the first object.
28. The method of embodiment 27, wherein:
   in accordance with a determination that the head pose is a first head pose, the forward-facing region of the 3D scene is a first region of the 3D scene; and
   in accordance with a determination that the head pose is a second head pose that is different from the first head pose, the forward-facing region of the 3D scene is a second region of the 3D scene that is different from the first region of the 3D scene.
29. The method of any one of embodiments 27-28, wherein capturing, via the one or more visual imaging sensors, the image data associated with the natural language input includes:
   while receiving the natural language input, capturing, via the one or more visual imaging sensors, the image data associated with the natural language input.
30. The method of any one of embodiments 27-29, wherein capturing, via the one or more visual imaging sensors, the image data associated with the natural language input includes:
   in response to receiving the natural language input, capturing, via the one or more visual imaging sensors, the image data associated with the natural language input.
31. The method of any one of embodiments 27-30, wherein the first audio output that corresponds to the first object indicates a result of a first task that is performed based on the natural language input and the first object.
32. The method of embodiment 31, wherein providing, via the one or more audio output devices, the first audio output that corresponds to the first object includes:
   in accordance with a determination that the forward-facing region of the 3D scene includes a plurality of detected objects, wherein the plurality of detected objects includes the first object, providing an audio output that requests for the user to disambiguate among the plurality of detected objects.
33. The method of any one of embodiments 27-32, wherein the second audio output that corresponds to the first object includes a request for the user to specify the first object.
34. The method of any one of embodiments 27-33, wherein:
   the computer system includes a first device and a second device, wherein the first device is different from the second device;
   the natural language input is received while the first device is worn by the user and while the second device is worn by the user; and
   the forward-facing region of the 3D scene is determined based on a position of the first device while the first device is worn by the user, an orientation of the first device while the first device is worn by the user, a position of the second device while the second device is worn by the user, and an orientation of the second device while the second device is worn by the user.
35. The method of any one of embodiments 27-34, wherein:
   the one or more visual imaging sensors include a first visual imaging sensor and a second visual imaging sensor different from the first visual imaging sensor; and
   capturing, via the one or more visual imaging sensors, the image data associated with the natural language input includes:
      capturing, via the first visual imaging sensor, first image data; and
      capturing, via the second visual imaging sensor, second image data that is different from the first image data.
36. The method of embodiment 35, wherein:
   the first image data is captured while the first visual imaging sensor is worn on a first side of the head of the user; and
   the second image data is captured while the second visual imaging sensor is worn on a second side of the head of the user, wherein the first side of the head of the user is opposite to the second side of the head of the user.
37. The method of any one of embodiments 35-36, wherein:
   in accordance with a determination that the first image data is captured while the first visual imaging sensor has a first orientation and a determination that the second image data is captured while the second visual imaging sensor has a second orientation, the visibility metric that represents the amount of the forward-facing region of the 3D scene depicted by the image data has a first value; and
   in accordance with a determination that the first image data is captured while the first visual imaging sensor has a third orientation different from the first orientation and a determination that the second image data is captured while the second visual imaging sensor has a fourth orientation different from the second orientation, the visibility metric that represents the amount of the forward-facing region of the 3D scene depicted by the image data has a second value different from the first value.
38. The method of any one of embodiments 35-37, wherein:
   in accordance with a determination that the first image data and the second image data depict a first amount of the forward-facing region of the 3D scene, the visibility metric has a first value; and
   in accordance with a determination that the first image data and the second image data depict a second amount of the forward-facing region of the 3D scene that is greater than the first amount of the forward-facing region of the 3D scene, the visibility metric has a second value that is greater than the first value.
39. The method of any one of embodiments 27-38, wherein the image data includes an image region that represents occlusion of the forward-facing region of the 3D scene, and wherein the visibility metric that represents the amount of the forward-facing region of the 3D scene depicted by the image data is based on the image region that represents occlusion of the forward-facing region of the 3D scene.
40. The method of embodiment 39, wherein:
   in accordance with a determination that the image region that represents occlusion of the forward-facing region of the 3D scene has a first size, the visibility metric that represents the amount of the forward-facing region of the 3D scene depicted by the image data has a third value; and
   in accordance with a determination that the image region that represents occlusion of the forward-facing region of the 3D scene has a second size that is greater than the first size, the visibility metric that represents the amount of the forward-facing region of the 3D scene depicted by the image data has a fourth value that is less than the third value.
41. The method of any one of embodiments 27-40, wherein the visibility metric that represents the amount of the forward-facing region of the 3D scene depicted by the image data is based on an amount of overlap between a non-occluded region of the 3D scene that is depicted by the image data and the forward-facing region of the 3D scene.
42. The method of any one of embodiments 27-41, wherein the forward-facing region of the 3D scene has predefined dimensions.
43. The method of any one of embodiments 27-42, wherein the forward-facing region of the 3D scene is at least a predefined distance away from the head of the user.
44. The method of any one of embodiments 27-43, wherein:
   a handheld object region is determined;
   the handheld object region is where a respective user holds a respective object in their hand while the respective user issues a query about the respective object; and
   the forward-facing region of the 3D scene is determined based on the handheld object region.
45. The method of any one of embodiments 27-44, wherein:
   in accordance with a determination that the natural language input that corresponds to the first object is a first type of natural language input, the forward-facing region of the 3D scene is a third region of the 3D scene; and
   in accordance with a determination that the natural language input that corresponds to the first object is a second type of natural language input that is different from the first type of natural language input, the forward-facing region of the 3D scene is a fourth region of the 3D scene that is different from the third region of the 3D scene.
46. The method of any one of embodiments 27-45, further comprising:
   after providing, via the one or more audio output devices, the second audio output that corresponds to the first object:
   receiving a user input that corresponds to the first object; and
   in response to receiving the user input that corresponds to the first object:
      in accordance with a determination, based on the user input that corresponds to the first object, that the image data satisfies a predetermined condition with respect to the first object, providing, via the one or more audio output devices, a third audio output that indicates a result of a second task that is performed based on the natural language input and the first object; and
      in accordance with a determination, based on the user input that corresponds to the first object, that the image data does not satisfy the predetermined condition with respect to the first object, providing, via the one or more audio output devices, a fourth audio output that requests the user to use an external device.
47. The method of embodiment 46, wherein after providing, via the one or more audio output devices, the fourth audio output that requests the user to use the external device, the external device displays a camera user interface and the external device captures an image of the first object while displaying the camera user interface, the method further comprising:
   after the external device captures the image of the first object while displaying the camera user interface, providing, via the one or more audio output devices, a fifth audio output that indicates a result of a third task that is performed (based on the image of the first object and the natural language input.
48. The method of embodiment 47, wherein the external device displays the camera user interface in response to a selection of a user interface element displayed by the external device.
49. The method of any one of embodiments 27-48, further comprising:
   before receiving the natural language input, capturing, via the one or more visual imaging sensors, third image data that represents the 3D scene, wherein:
   the first audio output is based on a second object that is detected based on the third image data that represents the 3D scene; and/or
   the second audio output is based on the second object that is detected based on the third image data that represents the 3D scene.
50. A non-transitory computer-readable storage medium storing one or more programs configured to be executed by one or more processors of a computer system in communication with one or more visual imaging sensors and one or more audio output devices, the one or more programs including instructions for performing the method of any of embodiments 27-49.
51. A computer system that is configured to communicate with one or more visual imaging sensors and one or more audio output devices, the computer system comprising:
   one or more processors; and
   one or more memories storing one or more programs configured to be executed by the one or more processors, the one or more programs including instructions for performing the method of any of embodiments 27-49.
52. A computer system that is configured to communicate with one or more visual imaging sensors and one or more audio output devices, the computer system comprising:
   means for performing the method of any of embodiments 27-49.
53. A computer program product comprising one or more programs configured to be executed by one or more processors of a computer system in communication with one or more visual imaging sensors and one or more audio output devices, the one or more programs including instructions for performing the method of any of embodiments 27-49.
54. A non-transitory computer-readable storage medium storing one or more programs configured to be executed by one or more processors of a computer system in communication with one or more visual imaging sensors and one or more audio output devices, the one or more programs including instructions for:
   while a head of a user of the computer system has a head pose that corresponds to a forward-facing region of a three-dimensional (3D) scene, receiving a natural language input that corresponds to a first object within the 3D scene;
   capturing, via the one or more visual imaging sensors, image data associated with the natural language input that corresponds to the first object within the 3D scene; and
   in response to receiving the natural language input that corresponds to the first object within the 3D scene:
      in accordance with a determination that a visibility metric that represents an amount of the forward-facing region of the 3D scene depicted by the image data satisfies a condition, providing, via the one or more audio output devices, a first audio output that corresponds to the first object; and
      in accordance with a determination that the visibility metric that represents the amount of the forward-facing region of the 3D scene depicted by the image data does not satisfy the condition, providing, via the one or more audio output devices, a second audio output that corresponds to the first object.
55. A computer system that is configured to communicate with one or more visual imaging sensors and one or more audio output devices, the computer system comprising:
   one or more processors; and
   one or more memories storing one or more programs configured to be executed by the one or more processors, the one or more programs including instructions for:
      while a head of a user of the computer system has a head pose that corresponds to a forward-facing region of a three-dimensional (3D) scene, receiving a natural language input that corresponds to a first object within the 3D scene;
      capturing, via the one or more visual imaging sensors, image data associated with the natural language input that corresponds to the first object within the 3D scene; and
      in response to receiving the natural language input that corresponds to the first object within the 3D scene:
         in accordance with a determination that a visibility metric that represents an amount of the forward-facing region of the 3D scene depicted by the image data satisfies a condition, providing, via the one or more audio output devices, a first audio output that corresponds to the first object; and
         in accordance with a determination that the visibility metric that represents the amount of the forward-facing region of the 3D scene depicted by the image data does not satisfy the condition, providing, via the one or more audio output devices, a second audio output that corresponds to the first object.
56. A computer system that is configured to communicate with one or more visual imaging sensors and one or more audio output devices, the computer system comprising:
   means, while a head of a user of the computer system has a head pose that corresponds to a forward-facing region of a three-dimensional (3D) scene, for receiving a natural language input that corresponds to a first object within the 3D scene;
   means for capturing, via the one or more visual imaging sensors, image data associated with the natural language input that corresponds to the first object within the 3D scene; and
   means, in response to receiving the natural language input that corresponds to the first object within the 3D scene, for:
      in accordance with a determination that a visibility metric that represents an amount of the forward-facing region of the 3D scene depicted by the image data satisfies a condition, providing, via the one or more audio output devices, a first audio output that corresponds to the first object; and
      in accordance with a determination that the visibility metric that represents the amount of the forward-facing region of the 3D scene depicted by the image data does not satisfy the condition, providing, via the one or more audio output devices, a second audio output that corresponds to the first object.
57. A computer program product comprising one or more programs configured to be executed by one or more processors of a computer system in communication with one or more visual imaging sensors and one or more audio output devices, the one or more programs including instructions for:
   while a head of a user of the computer system has a head pose that corresponds to a forward-facing region of a three-dimensional (3D) scene, receiving a natural language input that corresponds to a first object within the 3D scene;
   capturing, via the one or more visual imaging sensors, image data associated with the natural language input that corresponds to the first object within the 3D scene; and
   in response to receiving the natural language input that corresponds to the first object within the 3D scene:
      in accordance with a determination that a visibility metric that represents an amount of the forward-facing region of the 3D scene depicted by the image data satisfies a condition, providing, via the one or more audio output devices, a first audio output that corresponds to the first object; and
      in accordance with a determination that the visibility metric that represents the amount of the forward-facing region of the 3D scene depicted by the image data does not satisfy the condition, providing, via the one or more audio output devices, a second audio output that corresponds to the first object.

## Claims

1. A method, comprising:
at a first computer system in communication with one or more image sensors:
obtaining, using the one or more image sensors, a first image;
receiving a user request related to the first image; and
in response to obtaining the first image and receiving the user request:
in accordance with a determination that a quality of the first image does not satisfy a quality criterion, causing a second computer system to provide a prompt to capture a second image with the second computer system; and
in accordance with a determination that the quality of the first image satisfies the quality criterion:
generating a response to the user request based on the first image; and
providing an output including the response to the user request based on the first image.

2. The method of claim 1, wherein the first computer system is a head mounted electronic device and the second computer system is a smart phone.

3. The method of any one of claims 1-2, wherein an image sensor of the first computer system has a quality metric that is less than a quality metric of an image sensor of the second computer system.

4. The method of any one of claims 1-3, further comprising:
in response to detecting the first image and receiving the user request:
in accordance with a determination that the user request includes a request of a first type, selecting a first quality criterion as the quality criterion; and
in accordance with a determination that the user request includes a request of a second type different from the first type, selecting a second quality criterion different from the first quality criterion as the quality criterion.

5. The method of any one of claims 1-4, further comprising:
after causing a second computer system to provide a prompt to capture a second image with the second computer system:
detecting a user input to capture the second image with the second computer system;
generating a response to the user request based on the second image;
and
providing an output including the response to the user request based on the second image.

6. The method of any one of claims 1-5, wherein the determination of whether the quality of the first image satisfies the quality criterion comprises:
providing a prompt to a large language model (LLM), wherein the prompt includes a request of whether the first image is of sufficient quality to complete a task determined from the user request.

7. The method of any one of claims 1-5, wherein the determination of whether the quality of the first image satisfies the quality criterion comprises:
generating an embedding of the first image; and
comparing the embedding of the first image to a learned set of embeddings representing a high-quality image or a low-quality image.

8. The method of claim 7, further comprising:
in accordance with a determination that the user request is a request of a first type, selecting a first learned set of embeddings as the learned set of embeddings; and
in accordance with a determination that the user request is a request of a second type, selecting a second learned set of embeddings as the learned set of embeddings.

9. The method of any one of claims 1-8, further comprising:
in response to detecting the first image and receiving the user request:
in accordance with a determination that a context of the first computer system indicates that the first image does not satisfy the quality criterion:
forgoing determining whether the first image satisfies the quality criterion; and
causing the second computer system to provide the prompt to capture the second image with the second computer system.

10. The method of claim 9, wherein the determination that the context of the first computer system indicates that the first image does not satisfy the quality criterion includes a determination that the first computer system is moving.

11. The method of any one of claims 9-10, wherein the determination that the context of the first computer system indicates that the first image does not satisfy the quality criterion includes a determination that an illumination level of an environment of the first computer system is below an illumination threshold.

12. The method of any one of claims 9-11, wherein the determination that the context of the first computer system indicates that the first image does not satisfy the quality criterion includes a determination that the one or more image sensors are obscured.

13. The method of any one of claims 9-12, wherein the determination that the context of the first computer system indicates that the first image does not satisfy the quality criterion includes a determination that a field of view of the one or more image sensors includes text.

14. The method of any one of claims 1-13, further comprising:
in accordance with a determination that a quality of the first image does not satisfy the quality criterion, causing a camera user interface to be displayed with a display generation component in communication with the second computer system.

15. The method of claim 14, further comprising:
after causing the camera user interface to be displayed with the display generation component in communication with the second computer system:
detecting a user input to capture the second image; and
in response to detecting the user input to capture the second image, ceasing to display the camera user interface with the display generation component in communication with the second computer system.

16. The method of claim 14, wherein the camera user interface is displayed on a lock screen with the display generation component in communication with the second computer system.

17. The method of any one of claims 1-16, wherein the second computer system is not physically connected to the first computer system.

18. The method of any one of claims 1-16, wherein the second computer system is physically connected to the first computer system with a wire and wherein the second computer system and the first computer system are not located within a same housing.

19. A computer-readable storage medium storing one or more programs configured to be executed by one or more processors of a first computer system in communication with one or more image sensors, the one or more programs including instructions for performing the method of any of claims 1-16.

20. A first computer system configured to communicate with one or more image sensors, the first computer system comprising:
one or more processors; and
one or more memories storing one or more programs configured to be executed by the one or more processors, the one or more programs including instructions for performing the method of any of claims 1-16.
